# EUROPÄISCHE PATENTSCHRIFT

(11) **EP 3 372 989 B1**
(45) Veröffentlichungstag und Bekanntmachung des Hinweises auf die Patenterteilung: **04.05.2022**
(21) Anmeldenummer: 17182455.0
(22) Anmeldetag: 20.07.2017
(51) Int. Cl.: G01N 21/64, G02B 21/00

(54) **VERFAHREN ZUM RÄUMLICHEN MESSEN EINER NANOSKALIGEN STRUKTUR**
METHOD FOR SPATIAL MEASURING OF A NANOSCALE STRUCTURE
PROCÉDÉ DE MESURE SPATIALE D'UNE STRUCTURE À ÉCHELLE NANOMÉTRIQUE

(30) Priorität: 07.03.2017 DE 102017104736
(43) Veröffentlichungstag der Anmeldung: 12.09.2018
(73) Patentinhaber: Max-Planck-Gesellschaft zur Förderung der Wissenschaften e.V., 80539 München (DE)
(72) Erfinder: Hell Stefan W., 37085 Göttingen (DE)
(74) Vertreter: REHBERG HÜPPE + PARTNER

(56) Entgegenhaltungen:
- FABIAN GÖTTFERT ET AL: "Strong signal increase in STED fluorescence microscopy by imaging regions of subdiffraction extent", PROCEEDINGS NATIONAL ACADEMY OF SCIENCES PNAS, Bd. 114, Nr. 9, 13. Februar 2017 (2017-02-13), Seiten 2125-2130, XP055433907, US ISSN: 0027-8424, DOI: 10.1073/pnas.1621495114
- FRANCISCO BALZAROTTI ET AL: "Nanometer resolution imaging and tracking of fluorescent molecules with minimal photon fluxes", SCIENCE, Bd. 355, Nr. 6325, 10. Februar 2017 (2017-02-10), Seiten 606-612, XP055426923, ISSN: 0036-8075, DOI: 10.1126/science.aak9913
- JOHANN G. DANZL ET AL: "Coordinate-targeted fluorescence nanoscopy with multiple off states", NATURE PHOTONICS, Bd. 10, Nr. 2, 18. Januar 2016 (2016-01-18), Seiten 122-128, XP055245904, UK ISSN: 1749-4885, DOI: 10.1038/nphoton.2015.266

## Beschreibung

### TECHNISCHES GEBIET DER ERFINDUNG

Die Erfindung bezieht sich auf ein Verfahren zum räumlichen Messen einer nanoskaligen Struktur in einer Probe.

Insbesondere umfasst das Verfahren die Schritte des Markierens der nanoskaligen Struktur an verschiedenen Stellen mit Fluoreszenzmarkern, des Anregens der Fluoreszenzmarker mit Anregungslicht zur Emission von Fluoreszenzlicht, des Registrierens des aus der Probe emittierten Fluoreszenzlichts und des Bestimmens von Positionen der Fluoreszenzmarker in der Probe aus den registrierten Intensitäten des Fluoreszenzlichts.

Noch spezieller betrifft die vorliegende Erfindung ein Verfahren, bei dem das Bestimmen der Position der einzelnen Fluoreszenzmarker in der Probe mit einer Genauigkeit jenseits der Beugungsgrenze bei der Wellenlänge des Anregungslichts und bei der Wellenlänge des Fluoreszenzlichts erfolgt. Zu diesem Zweck wird eine Intensitätsverteilung von Fluoreszenzverhinderungslicht so ausgebildet, dass sie ein lokales Minimum aufweist, welches dann an verschiedenen Positionen in der Probe angeordnet wird. Dabei wird das aus der Probe emittierte Fluoreszenzlicht getrennt für die verschiedenen Positionen des Minimums in der Probe registriert. Bei hinreichend kleinen Abmessungen des lokalen Minimums sind so die Voraussetzungen dafür geschaffen, dass das Bestimmen der Positionen der Fluoreszenzmarker in der Probe aus den für die verschiedenen Positionen des Minimums registrierten Intensitäten des Fluoreszenzlichts mit einer Genauigkeit weit jenseits der Beugungsgrenze möglich ist.

### STAND DER TECHNIK

Aus der WO 2014/108455 A1 ist ein Verfahren zum räumlich hochauflösenden Abbilden einer mit Fluoreszenzmarkern markierten Struktur einer Probe bekannt, bei dem die Probe wie in der STED-Fluoreszenzmikroskopie mit Anregungslicht und mit Stimulationslicht als Fluoreszenzverhinderungslicht beaufschlagt wird, um den Bereich der Probe, dem aus der Probe emittiertes und detektiertes Fluoreszenzlicht zugeordnet werden kann, auf den Bereich einer Nullstelle des Stimulationslichts zu begrenzen. Um dabei die Fluoreszenzmarker vor den hohen Intensitäten des Stimulationslichts im Bereich seiner an die Nullstelle angrenzenden Intensitätsmaxima zu schützen, wird die Probe zusätzlich mit Anregungsverhinderungslicht beaufschlagt, dessen Intensitätsverteilung ein lokales Minimum aufweist, das mit der Nullstelle des Stimulationslichts zusammenfällt. Dieses Anregungsverhinderungslicht kann insbesondere Ausschaltlicht sein, das schaltbare Fluoreszenzmarker außerhalb des Minimums des Anregungsverhinderungslichts in einen inaktiven Zustand ausschaltet, in dem sie mit dem Anregungslicht nicht zur Emission von Fluoreszenzlicht anregbar sind. Konkret kann es sich bei den Fluoreszenzmarkern um schaltbare Fluoreszenzfarbstoffe handeln, wie sie bei der hochauflösenden RESOLFT-Fluoreszenzmikroskopie zum Einsatz kommen.

Ein Verfahren zum räumlich hochauflösenden Abbilden einer mit Fluoreszenzmarkern markierten Struktur einer Probe mit den Merkmalen des Oberbegriffs des unabhängigen Patentanspruchs 1 geht aus der DE 10 2016 117 096 A1 hervor. Auch hierbei handelt dich um ein Verfahren der STED-Fluoreszenzmikroskopie, bei dem die Probe neben Anregungslicht mit Stimulationslicht als Fluoreszenzverhinderungslicht beaufschlagt wird, um den Bereich der Probe, dem aus der Probe emittiertes und detektiertes Fluoreszenzlicht zugeordnet werden kann, auf den Bereich einer Nullstelle des Stimulationslichts zu begrenzen. Um dabei die Fluoreszenzmarker vor den hohen Intensitäten des Stimulationslichts im Bereich seiner an die Nullstelle angrenzenden Intensitätsmaxima und den damit verbundenen Gefahren eines photochemischen Bleichens zu schützen, wird die Nullstelle ausschließlich innerhalb eines Nahbereichs in der Probe angeordnet, dessen Abmessungen deutlich kleiner als ein Abstand dieser Intensitätsmaxima sind. Zusätzlich kann die Probe außerhalb des Nahbereichs mit Ausschaltlicht beaufschlagt werden, das schaltbare Fluoreszenzmarker außerhalb des Minimums des Anregungsverhinderungslichts in einen inaktiven Zustand ausschaltet, in dem sie mit dem Anregungslicht nicht zur Emission von Fluoreszenzlicht anregbar sind. Konkret kann es sich auch bei diesen Fluoreszenzmarkern um schaltbare Fluoreszenzfarbstoffe handeln, wie sie in der hochauflösenden RESOLFT-Fluoreszenzmikroskopie zum Einsatz kommen.

Das aus der DE 10 2016 117 096 A1 bekannte Verfahren wird auch in FABIAN GÖTTFERT ET AL.: "Strong signal increase in STED fluorescence microscopy by imaging regions of subdiffraction extent", PROCEEDINGS NATIONAL ACADEMY OF SCIENCES PNAS, Bd. 114, Nr. 9, 13. Februar 2017, Seiten 2125-2130 beschrieben. Hier ist weiterhin offenbart, dass die interessierende nanoskalige Struktur in der Probe an unterschiedlichen Stellen mit rotfluoreszierenden Fluoreszenzmarkern einerseits und grünfluoreszierenden Fluoreszenzmarkern andererseits markiert werden kann, wobei das Fluoreszenzlicht von den Fluoreszenzmarkern wellenlängenselektiv in einem roten und einem grünen Kanal registriert wird.

Auch aus JOHANN G. DANZL ET AL.: "Coordinate-targeted fluorescence nanoscopy with multiple off states", NATURE PHOTONICS, Bd. 10, Nr. 2, 18. Januar 2016, Seiten 122-128, ist ein Verfahren der STED-Fluoreszenzmikroskopie bekannt, bei dem die Probe neben Anregungslicht und Anregungsverhinderungslicht mit Ausschaltlicht beaufschlagt wird. Dabei sind Intensitätsverteilungen des Anregungslichts, des Anregungsverhinderungslichts und des Ausschaltlichts konzentrisch angeordnet mit einem Maximum des Anregungslichts und Minima des Anregungsverhinderungslichts und des Ausschaltlichts im Zentrum.

Aus FRANCISCO BALZAROTTI ET AL.: "Nanometer resolution imaging and tracking of fluorescent molecules with minimal photon fluxes", SCIENCE; Bd. 355, Nr, 6325, 10. Februar 2017, Seiten 606-612, ist ein als MINFLUX-Mikroskopie bezeichnetes Verfahren bekannt. Bei der MINFLUX-Mikroskopie werden die Positionen von vereinzelten Fluoreszenzmarkern in einer Probe dadurch bestimmt, dass eine Nullstelle einer Intensitätsverteilung von Anregungslicht an einem Mittelpunkt eines Messbereichs und an drei gleichmäßig um den Mittelpunkt herum verteilten Positionen am Rand des Messbereichs angeordnet werden und dass an diesen insgesamt vier Positionen der Nullstelle die Intensität des Fluoreszenzlichts von dem jeweiligen Fluoreszenzmarker gemessen wird. Je näher die vier Positionen der Nullstelle beieinander liegen und dennoch zusammen die gesuchte Position des jeweiligen Fluoreszenzmarkers überspannen, desto genauer kann die Position des Fluoreszenzmarkers aus nur wenigen Photonen des Fluoreszenzlichts, die für jede der Positionen der Nullstelle registriert werden, bestimmt werden.

Beim sogenannten Drug Screening und anderen Verfahren, mit denen eine Vielzahl von Substanzen danach durchsucht wird, ob sie Substanzen mit speziellen Eigenschaften in Bezug auf andere Substanzen oder biologische Objekte umfassen, werden die Substanzen jeweils mehrfach mit den anderen Substanzen oder mehreren Exemplaren der Objekte in Kontakt gebracht und die darauf erfolgenden Reaktionen der anderen Substanzen oder Objekte beobachtet. Die Zahl der dabei insgesamt zu beobachtenden Reaktionen beträgt typischerweise ein Vielfaches der Anzahl der durchsuchenden Substanzen, weil zum einen mehrere identische Paarungen notwendig sind, um statistisch aussagekräftige Ergebnisse zu erhalten, und weil zum anderen die Substanzen die gewünschten Eigenschaften häufig gegenüber verschiedenen anderen Substanzen oder verschiedenen biologischen Objekten zeigen sollen. Das systematische Erfassen einer solchen großen Anzahl von Reaktionen ist grundsätzlich aufwändig. Vielfach sind Reaktionen auf molekularem Niveau auch nur mit Hilfe von Nachweisreaktionen erfassbar. Das Erfassen einer Reaktionsdynamik ist oftmals gar nicht möglich.

### AUFGABE DER ERFINDUNG

Der Erfindung liegt die Aufgabe zugrunde, ein Verfahren aufzuzeigen, mit dem eine nanoskalige Struktur bezüglich ihrer einzelnen mit den Fluoreszenzmarkern markierten Positionen auch bei höherer Dichte der gleichzeitig in ihrem aktiven Zustand befindlichen Fluoreszenzmarker ähnlich genau wie bei der MINFLUX-Mikroskopie gemessen werden kann. Das Verfahren soll auch für das Messen mehrerer nanoskaliger Strukturen beispielsweise im Rahmen eines Drug Screenings geeignet sein.

### LÖSUNG

Die Aufgabe der Erfindung wird durch ein Verfahren mit den Merkmalen eines der unabhängigen Patentansprüche 1, 3 und 4 gelöst. Die abhängigen Patentansprüche betreffen bevorzugte Ausführungsformen des erfindungsgemäßen Verfahrens.

### BESCHREIBUNG DER ERFINDUNG

Ein erfindungsgemäßes Verfahren zum räumlichen Messen mindestens einer nanoskaligen Struktur in einer Probe umfasst die sich teilweise überlappenden Schritte Markieren, Anregen, Registrieren und Bestimmen.

Dass bei dem erfindungsgemäßen Verfahren eine nanoskalige Struktur gemessen wird, bedeutet, dass diese Struktur nanoskalige Abmessungen von maximal 200 nm, häufig von maximal 100 nm und oftmals von maximal 50 nm oder auch nur 30 nm, aufweist.

Beim Markieren wird die nanoskalige Struktur an verschiedenen Stellen mit Fluoreszenzmarkern markiert. Das heißt, jede Struktur, die erfindungsgemäß gemessen wird, wird mit mindestens zwei Fluoreszenzmarkern markiert, die an zwei verschiedenen Stellen an der Struktur angebracht werden. Zum möglichst schnellen Messen der Struktur, kann die Zahl der Fluoreszenzmarker, mit denen jede Struktur markiert wird, auch gezielt klein gehalten und beispielsweise auf nicht mehr als 10 beschränkt werden. Wenn mehrere gleiche Strukturen gemessen werden, werden vorzugsweise alle Strukturen an gleichen Stellen mit einer gleichen Zahl von Fluoreszenzmarkern markiert. Die Fluoreszenzmarker, die an verschiedenen Stellen einer Struktur angebracht werden, können gleich oder unterschiedlich sein.

Beim Anregen werden die Fluoreszenzmarker, mit denen die zu messende Struktur markiert ist, mit Anregungslicht zur Emission von Fluoreszenzlicht angeregt, und zwar an der jeweiligen Position eines lokalen Minimums einer Intensitätsverteilung von Fluoreszenzverhinderungslicht, das beim Anregen an verschiedenen Positionen in der Probe angeordnet wird. Das lokale Minimum kann eine echte Nullstelle der Intensitätsverteilung des Fluoreszenzverhinderungslichts sein, in der die Intensität des Fluoreszenzverhinderungslichts tatsächlich auf null zurück geht. In jedem Fall ist eine nur geringe Restintensität des Fluoreszenzverhinderungslichts in dem lokalen Minimum erwünscht. In allen Richtungen, in denen die Struktur bei dem erfindungsgemäßen Verfahren gemessen wird, ist das lokale Minimum durch ein Maximum der Intensitätsverteilung des Fluoreszenzverhinderungslichts begrenzt. Bei dem erfindungsgemäßen Verfahren wird das lokale Minimum zum Anregen gezielt an verschiedenen Positionen in einem Nahbereich in der Probe angeordnet. Die Abmessungen dieses Nahbereichs, womit insbesondere dessen Durchmesser gemeint ist, sind nicht größer als die Beugungsgrenze bei der Wellenlänge des Anregungslichts und der Wellenlänge des Fluoreszenzlichts.

Beim Registrieren wird das aus der Probe emittierte Fluoreszenzlicht getrennt für die einzelnen Fluoreszenzmarker und für die verschiedenen Positionen des Minimums in der Probe registriert. So kann das registrierte Fluoreszenzlicht jeweils sowohl einem bestimmten Fluoreszenzmarker als auch einer bestimmten Position des Minimums in der Probe zugeordnet werden. Entsprechend muss das getrennte Registrieren des aus der Probe emittierten Fluoreszenzlichts nur soweit gehen, dass diese Zuordnung des registrierten Fluoreszenzlichts jeweils sowohl zu einem bestimmten Fluoreszenzmarker als auch zu einer bestimmten Position des Minimums in der Probe möglich ist.

Damit ist es beim Bestimmen möglich, die Positionen der einzelnen Fluoreszenzmarker in der Probe aus dem für den jeweiligen Fluoreszenzmarker für die verschiedenen Positionen des Minimums registrierten Intensitäten des Fluoreszenzlichts zu bestimmen.

Das Messen einer nur mit wenigen Fluoreszenzmarkern markierten Struktur bedeutet insbesondere ein Vermessen von Abständen zwischen den Positionen der Fluoreszenzmarker an der Struktur.

Vorzugsweise weist eine Intensitätsverteilung des Anregungslichts bei dem erfindungsgemäßen Verfahren ein Maximum an der jeweiligen Position des lokalen Minimums der Intensitätsverteilung des Fluoreszenzverhinderungslichts auf. Dadurch ist das Anregungslicht auf den Bereich des lokalen Minimums der Intensitätsverteilung des Fluoreszenzverhinderungslichts konzentriert, auch wenn sein Maximum wegen der Beugungsgrenze größere Abmessungen aufweist, als sie bei dem lokalen Minimum nach unten möglich sind und sie bei dem erfindungsgemäßen Verfahren regelmäßig implementiert werden.

Bei dem erfindungsgemäßen Verfahren werden also das Anregungslicht und das Fluoreszenzverhinderungslicht mit solchen Intensitätsverteilungen überlagert, wie dies auch bei der RESOLFT- und insbesondere der STED-Mikroskopie geschieht. Entsprechend kann es sich bei dem Fluoreszenzverhinderungslicht insbesondere um STED oder Stimulationslicht handeln, das die mit dem Anregungslicht angeregten Fluoreszenzmarker durch stimulierte Emission wieder abregt, bevor sie Fluoreszenzlicht emittieren können, das registriert werden würde. Bei dem erfindungsgemäßen Verfahren wird jedoch zumindest nicht nur ausgenutzt, dass das Fluoreszenzlicht nur von einem Fluoreszenzmarker stammen kann, der sich in dem Bereich des lokalen Minimums befindet. Vielmehr wird auch die Abhängigkeit der Intensität des Fluoreszenzlichts, die für den jeweiligen Fluoreszenzmarker registriert wird, von der Entfernung seiner Position zu der Position des lokalen Minimums ausgenutzt, um dessen Position mit besonders hoher Genauigkeit aus den für mehrere Positionen des Minimums registrierten Intensitäten des Fluoreszenzlichts zu bestimmen. Entsprechend kann bei dem erfindungsgemäßen Verfahren das Minimum an ebenso wenigen Positionen in der Probe positioniert werden und die Auswertung der Intensitäten des registrierten Fluoreszenzlichts kann nach denselben Prinzipien erfolgen wie bei der MINFLUX-Mikroskopie. Als signifikanter Unterschied verbleibt jedoch, dass bei der MINFLUX-Mikroskopie die Intensität des Fluoreszenzlichts von dem jeweiligen Fluoreszenzmarker mit zunehmendem Abstand seiner Position zu der Position des lokalen Minimums zunimmt, während sie bei dem erfindungsgemäßen Verfahren mit zunehmendem Abstand abnimmt.

Soweit das erfindungsgemäße Verfahren Überschneidungen mit der RESOLFT- und insbesondere der STED-Mikroskopie aufweist, so unterscheidet es sich von der RESOLFT- und STED-Mikroskopie aber doch dadurch, dass gezielt die Positionen vereinzelter Fluoreszenzmarker bestimmt werden, wozu die Fluoreszenzmarker vielfach zunächst zu vereinzeln sind, und dass für die Positionsbestimmung die zu wenigen verschiedenen Positionen des lokalen Minimums registrierten Intensitäten des Fluoreszenzlichts ausgewertet werden, in der Regel durch Anfitten einer ein lokales Maximum aufweisenden Funktion. Dabei kann die Position des lokalen Maximums der angefitteten Funktion der gesuchten Position des Fluoreszenzmarkers in der Probe gleichgesetzt werden.

Gegenüber dem Vorgehen bei der MINFLUX-Mikroskopie weist das erfindungsgemäße Verfahren den Vorteil auf, dass durch die an die Nullstelle angrenzenden Intensitätsmaxima des Fluoreszenzverhinderungslichts in vorteilhafter Weise verhindert wird, dass von in der Nähe befindlichen anderen Fluoreszenzmarkern emittiertes Fluoreszenzlicht die Positionsbestimmung stört.

Bei dem erfindungsgemäßen Verfahren sind die Abmessungen des Nahbereichs jedenfalls nicht größer als die Beugungsgrenze bei der Wellenlänge des Anregungslichts und der Wellenlänge des Fluoreszenzlichts, und der Nahbereich wird durch das Anordnen des lokalen Minimums der Intensitätsverteilung des Fluoreszenzverhinderungslichts an den verschiedenen Stellen innerhalb des Nahbereichs abgetastet, d. h. unterteilt, so dass die Positionen der Fluoreszenzmarker mit einer Ortsauflösung von einem Bruchteil der Abmessungen des Nahbereichs bestimmt werden können. Vorzugsweise sind die Abmessungen des Nahbereichs, in dem das lokale Minimum an verschiedenen Positionen um die Position des jeweiligen Positionierhilfsmittels angeordnet wird, nicht größer als die Hälfte und noch mehr bevorzugt nicht größer als ein Viertel der Beugungsgrenze bei der Wellenlänge des Anregungslichts und der Wellenlänge des Fluoreszenzlichts.

Bei der Durchführung des erfindungsgemäßen Verfahrens hat sich herausgestellt, dass das lokale Minimum der Intensitätsverteilung des Fluoreszenzverhinderungslichts nicht an vielen verschiedenen Positionen in dem Nahbereich um die Position des jeweiligen Positionierhilfsmittels angeordnet werden muss, um die Position des jeweiligen Fluoreszenzmarkers mit einer verglichen mit den Abmessungen des Nahbereichs sehr hohen Ortsauflösung zu bestimmen. Entsprechend werden die Positionen der einzelnen Fluoreszenzmarker bei dem erfindungsgemäßen Verfahren typischerweise aus den für nicht mehr als 4n, häufig aus den für nicht mehr als 3n und besonders bevorzugt aus den für nicht mehr als 2n verschiedene Positionen des Minimums registrierten Intensitäten des Fluoreszenzlichts bestimmt. Dabei ist n die Anzahl der Raumrichtungen, in denen die Positionen der einzelnen Fluoreszenzmarker in der Probe bestimmt werden.

Das Bestimmen der Positionen der einzelnen Fluoreszenzmarker in der Probe kann insbesondere ein Anfitten einer ein lokales Maximum aufweisenden räumlichen Funktion an die für den jeweiligen Fluoreszenzmarker für die verschiedenen Positionen des Minimums der Intensitätsverteilung des Fluoreszenzverhinderungslichts registrierten Intensitäten des Fluoreszenzlichts umfassen.

Die das lokales Maximum aufweisende räumlichen Funktion weist idealer Weise denselben Verlauf auf wie die Intensität des Fluoreszenzlichts von dem jeweiligen Fluoreszenzmarker über dessen Abstand zu dem lokalen Minimum der Intensitätsverteilung des Fluoreszenzverhinderungslichts. Um die das lokales Maximum aufweisende räumliche Funktion zu bestimmen, kann daher mindestens einer der Fluoreszenzmarker oder ein weiterer gleichartiger Fluoreszenzmarker mit dem Minimum abgetastet werden, wobei das aus der Probe emittierte Fluoreszenzlicht registriert wird. Dabei bedeutet Abtasten, dass das lokale Minimum hierbei in verglichen mit den wenigen Positionen des lokalen Minimums in dem jeweiligen Nahbereich vielen kleinen Schritten verlagert wird.

Bei dem erfindungsgemäßen Verfahrens können die Abmessungen des Nahbereichs, in dem das Minimum der Intensitätsverteilung des Fluoreszenzverhinderungslichts gezielt angeordnet wird zusätzlich so festgelegt werden, dass sie nicht größer als eine Halbwertsbreite oder die Hälfte oder ein Viertel der Halbwertsbreite einer Verteilung der Intensität des von dem jeweiligen Fluoreszenzmarker emittierten Fluoreszenzlichts über dessen Abstand zu dem lokalen Minimum sein. Diese Verteilung ist genau das, was erhalten wird, wenn der Fluoreszenzmarker wie im vorangehenden Absatz beschrieben mit dem Minimum abgetastet werden, wobei das aus der Probe emittierte Fluoreszenzlicht registriert wird.

Bei dem erfindungsgemäßen Verfahrens können die Schritte des Anregens, Registrierens und Bestimmens für mindestens eine erhöhte Intensität des Fluoreszenzverhinderungslichts und vorzugsweise für entsprechend verkleinerte Abmessungen des Nahbereichs wiederholt werden. Der kleinere Nahbereich kann dabei um eine mit der früheren Intensität des Fluoreszenzverhinderungslichts bestimmte Position des jeweiligen Fluoreszenzmarkers herum angeordnet werden. Auf diese Weise kann die Genauigkeit der Positionsbestimmung iterativ erhöht werden.

Damit das aus der Probe emittierte Fluoreszenzlicht getrennt für die einzelnen Fluoreszenzmarker registriert werden kann, mit denen die jeweilige Struktur markiert ist, muss das von den verschiedenen Fluoreszenzmarkern emittierte Fluoreszenzlicht trennbar sein. Dabei ist es nicht allein möglich, das Fluoreszenzlicht von den verschiedenen Fluoreszenzmarkern danach zu trennen, von wo es aus der Probe emittiert wird, da mehrere Fluoreszenzmarker jeweils an derselben nanoskaligen Struktur angebracht sind und damit näher, in aller Regel viel näher beieinanderliegen als die Beugungsgrenze bei der Wellenlänge des Fluoreszenzlichts. Daher müssen andere Unterscheidungsmöglichkeiten des Fluoreszenzlichts von den einzelnen Fluoreszenzmarkern vorhanden sein oder geschaffen werden.

Wenn die Fluoreszenzmarker, mit denen die nanoskalige Struktur an verschiedenen Stellen markiert wird, aus Fluoreszenzmarkern ausgewählt werden, die sich in ihren spektralen Eigenschaften unterscheiden, können die einzelnen Fluoreszenzmarker an der jeweiligen Struktur selektiv mit Anregungslicht unterschiedlicher Wellenlängen angeregt werden und/oder das von ihnen emittierte Fluoreszenzlicht kann wellenlängenselektiv detektiert werden. Weiterhin können die Fluoreszenzmarker aus solchen ausgewählt werden, die einen aktiven Zustand, in dem sie mit Anregungslicht zur Emission von Fluoreszenzlicht anregbar sind, und einen inaktiven Zustand, in dem sie zumindest mit demselben Anregungslicht nicht zur Emission von Fluoreszenzlicht anregbar sind, aufweisen und die zwischen ihrem aktiven und ihrem inaktiven Zustand überführbar sind. Dann kann selektiv oder auf Übergangswahrscheinlichkeiten basierend jeweils nur ein Fluoreszenzmarker in seinem aktiven Zustand belassen oder in seinen aktiven Zustand gebracht werden, so dass das registrierte Fluoreszenzlicht nach Anregung mit dem Anregungslicht nur von ihm stammen kann. Bei der Vorgehensweise auf Basis von Übergangswahrscheinlichkeiten kann es zwar sein, dass wiederholt nacheinander derselbe Fluoreszenzmarker in den aktiven Zustand gelangt. Dies wird jedoch mit wachsender Zahl der Wiederholungen zunehmend unwahrscheinlicher.

Bei dem erfindungsgemäßen Verfahren nach dem unabhängigen Patentanspruch 1 werden die Fluoreszenzmarker daher aus solchen ausgewählt, die sich in ihrem Anregungsspektrum und/oder ihrem Emissionsspektrum unterscheiden oder die mit Schaltlicht aus ihrem aktiven Zustand in ihren inaktiven Zustand (oder umgekehrt) schaltbar sind. Das Schaltlicht kann dabei grundsätzlich dieselbe Wellenlänge wie das Anregungslicht oder das Fluoreszenzverhinderungslicht aufweisen.

Bei der praktischen Umsetzung des erfindungsgemäßen Verfahrens kann der jeweilige Nahbereich mit anderen Mitteln zur Relativverlagerung des Minimums der Intensitätsverteilung des Fluoreszenzverhinderungslichts gegenüber der Probe angefahren werden als die Positionen des Minimums innerhalb des Nahbereichs. Dies ermöglicht es, für die Feinpositionierung des Minimums innerhalb des Nahbereichs Mittel einzusetzen, die zwar zur präzisen Positionierung des Minimums in der Probe geeignet sind, aber nicht zur Verlagerung des Minimums über größere Entfernungen. Diese größeren Entfernungen können dann mit den Mitteln zum Anfahren des Nahbereichs überbrückt werden. Konkret können die Mittel zum Anfahren des jeweiligen Nahbereichs die gesamte Probe gegenüber einem Objektiv verlagern, das das Anregungslicht in die Probe fokussiert, während das Minimum innerhalb des jeweiligen Nahbereichs mit gegenüber dem Objektiv arbeitenden Strahlablenkmitteln verlagert wird.

Bei dem erfindungsgemäßen Verfahren kann die Struktur an ein Positionierhilfsmittel gekoppelt werde, dessen Position in der Probe bekannt ist und/oder dessen Position in der Probe nach dem Koppeln aus von dem Positionierhilfsmittel reflektiertem Licht bestimmt wird. Dann kann der Nahbereich um die bekannte Position des Positionierhilfsmittels herum angeordnet werden. Damit wird direkt sichergestellt, dass die an der Struktur anhängenden Fluoreszenzmarker in den Nahbereich fallen.

Vorzugsweise liegt bei dieser Ausführungsform des erfindungsgemäßen Verfahrens die Position des Positionierhilfsmittels in der Probe und damit relativ zu Fixpunkten der Probe fest. So kann der Nahbereich bzw. können die Positionen des Minimums innerhalb des Nahbereichs relativ zu den Fixpunkten der Probe angefahren werden.

Insbesondere können bei dieser Ausführungsform des erfindungsgemäßen Verfahrens mehrere zu messende nanoskalige Strukturen an jeweils ein Positionierhilfsmittel gekoppelt werden.

Bei den Positionierhilfsmitteln handelt es sich um solche, deren Positionen in der Probe bereits bekannt sind, weil sie beispielsweise bei der Herstellung oder Vorbereitung der Probe gezielt an diesen Positionen angeordnet wurden und/oder weil ihre in der Probe festliegenden Positionen bereits vor dem Koppeln auf irgendeine Weise bestimmt wurden. Alternativ oder zusätzlich können die Positionen der Positionierhilfsmittel in der Probe fortlaufend und damit auch noch nach dem Koppeln aus Licht bestimmt werden, das von den Positionierhilfsmitteln reflektiert wird. Mit ihren oben angegebenen maximalen Abmessungen erstrecken sich die nanoskaligen Strukturen von der Position des jeweiligen Positionierhilfsmittels, bei endseitiger Kopplung über nicht wesentlich mehr als 200 nm, 100 nm, 50 nm oder 30 nm und bei bevorzugter zentraler Ankopplung über nicht wesentlich mehr als 100 nm, 50 nm, 25 nm oder 15 nm.

Auch wenn die Positionen der einzelnen Positionierungshilfsmittel in der Probe fest und grundsätzlich bekannt sind, kann mithilfe von Licht, das von den Positionierungshilfsmitteln reflektiert wird, das Anfahren dieser Positionen bzw. der sich darum erstreckenden Nahbereiche mit dem lokalen Minimum unterstützt oder sogar vollständig gesteuert werden.

Bei dieser Ausführungsform des erfindungsgemäßen Verfahrens kann der Nahbereich um die Position des Positionierhilfsmittels mit dem Minimum der Intensitätsverteilung des Fluoreszenzverhinderungslichts gezielt angefahren werden, weil die Position des Positionierhilfsmittels von vornherein bekannt ist oder bestimmt wird, ohne dass es hierfür der Emission von Photonen des Fluoreszenzlichts von den Fluoreszenzmarkern bedarf. Das Messen der jeweiligen nanoskaligen Struktur mit Hilfe der Fluoreszenzmarker erfolgt bei dieser Ausführungsform des erfindungsgemäßen Verfahrens also unter Ausnutzung einer Vorkenntnis über die Position der nanoskaligen Struktur bzw. der daran angeordneten einzelnen Fluoreszenzmarker. Aufgrund des Ankoppelns der interessierenden Struktur an das Positionierhilfsmittel befinden sich die Struktur und damit auch die an ihr anhängenden Fluoreszenzmarker in der unmittelbaren Nähe eines Positionierhilfsmittels. Beim Anfahren des Nahbereichs um dieses Positionierhilfsmittel mit dem Minimum der Lichtintensitätsverteilung des Anregungslichts oder des weiteren Lichts liegt dieses Minimum daher schon nahe an dem jeweiligen Fluoreszenzmarker. Je genauer die Position der Positionierhilfsmittel bekannt ist, desto kleiner kann der Nahbereich gewählt werden, in dem das Minimum der Lichtintensitätsverteilung des Anregungslichts oder des weiteren Lichts an verschiedenen Positionen angeordnet wird, um die Position des jeweiligen Fluoreszenzmarkers zu bestimmen.

Bei der praktischen Umsetzung dieser Ausführungsform des erfindungsgemäßen Verfahrens können die Positionierhilfsmittel in der Probe festliegende Ankoppelplätze für die zu messenden nanoskaligen Strukturen sein, die in einem vordefinierten Muster in der Probe angeordnet sein können. Insbesondere können die Strukturen über eine Immunreaktion an die Ankoppelplätze angekoppelt werden. Dabei kann vor der Durchführung des erfindungsgemäßen Verfahrens zunächst ein zusätzlicher Fluoreszenzmarker an die Ankoppelplätze angekoppelt werden, dessen Fluoreszenzlicht zur Bestimmung der Positionen der Ankoppelplätze benutzt wird. Dabei können sehr viele Photonen des Fluoreszenzlichts und dem weiteren Fluoreszenzmarker genutzt werden, um die Positionen der Ankoppelplätze mit sehr hoher Genauigkeit zu bestimmen. Anschließend können diese weiteren Fluoreszenzmarker wieder von den Ankoppelplätzen abgelöst werden, deren Positionen dann bekannt sind, wenn beim anschließenden Durchführen der hier erläuterten Ausführungsform des erfindungsgemäßen Verfahrens die nanoskaligen Strukturen angekoppelt werden.

Wenn hingegen die nanoskaligen Strukturen an die Positionierhilfsmittel angekoppelt werden, bevor deren Positionen bekannt sind, sind Möglichkeiten bereitzustellen, die Positionen der Positionierhilfsmittel zu bestimmen, möglichst ohne hierfür auf Fluoreszenzlicht von den Fluoreszenzmarkern an den nanoskaligen Strukturen zurück greifen zu müssen. Zu diesem Zweck können die Positionierhilfsmittel Gold- oder Silberpartikel oder Quantum Dots aufweisen, die Licht reflektieren, mit dessen Hilfe die Positionen der Positionierhilfsmittel mit hoher Genauigkeit bestimmt werden kann.

In einer Ausführungsform des erfindungsgemäßen Verfahrens sind mehrere zu messende nanoskalige Strukturen gleich oder umfassen zumindest mehrere gleiche Strukturen. Dabei können die gleichen Strukturen in verschiedenen Bereichen der Probe verschiedenen Umgebungsbedingungen ausgesetzt werden, um die Einflüsse dieser Umgebungsbedingungen auf die nanoskaligen Strukturen zu messen. Insbesondere kann der resultierende räumliche Abstand oder die Relativanordnung der Fluoreszenzmarker an den nanoskaligen Strukturen gemessen werden.

Darüber hinaus können die Positionen der einzelnen Fluoreszenzmarker in der Probe für mindestens zwei verschiedene Zeitpunkte aus den für diese mindestens zwei Zeitpunkte registrierten Intensitäten des Fluoreszenzlichts bestimmt werden, um beispielsweise Reaktionen der Strukturen auf geänderte Umgebungsbedingungen oder auch darüber hinaus eine Dynamik dieser Reaktionen zu messen. Dazu können die Strukturen zu den mindestens zwei Zeitpunkten verschiedenen Umgebungsbedingungen ausgesetzt werden oder die mindestens zwei Zeitpunkte können auf eine solche Änderung der Umgebungsbedingungen folgen.

Die zuletzt beschriebene Ausführungsform des erfindungsgemäßen Verfahrens ermöglicht insbesondere eine effiziente Durchführung von Drug Screenings, bei denen die geänderten Umgebungsbedingungen durch Zugabe einer der zu durchsuchenden Substanzen eingestellt werden. Die Reaktion der Struktur auf die Zugabe der jeweiligen Substanz wird durch wiederholtes erfindungsgemäßes Messen der jeweiligen nanoskaligen Struktur direkt erfasst. Es bedarf hierzu keiner Durchführung von Nachweisreaktionen an der nanoskaligen Struktur. Zudem sind die bei einem solchen erfindungsgemäßen Drug Screening verbrauchten Mengen der zu durchsuchenden Substanzen winzig klein. Theoretisch reicht die Zugabe eines einzigen Moleküls jeder der Substanzen zu einer der nanoskaligen Strukturen aus. Entsprechend können auch Substanzen, die nur in kleinen Mengen zur Verfügung stehen, bei einem erfindungsgemäßen Drug Screening untersucht werden.

Vorteilhafter Weise werden die Strukturen durch ihr Koppeln an die Positionierhilfsmittel nicht nur in eine bekannte oder ohne Belastung der Fluoreszenzmarker bestimmbare Position gebracht, sondern die Strukturen werden zugleich definiert ausgerichtet, d. h. beispielsweise parallel zu einer Haupterstreckungsebene der jeweiligen Probe orientiert. Diese Orientierung verfolgt insbesondere den Zweck, die Strukturen so gegenüber der Probe zu orientieren, dass Abstände der Fluoreszenzmarker bzw. der verschiedenen Stellen, an denen die Strukturen mit den Fluoreszenzmarkern markiert sind, in oder parallel zu der Richtung oder Ebene verlaufen, in der das lokale Minimum an verschiedenen Positionen in der Probe angeordnet wird. Damit werden diese Abstände und auch Änderungen dieser Abstände durch das Bestimmen der Positionen der einzelnen Fluoreszenzmarker besonders leicht erfassbar. Auch wenn eine solche zielgerichtete Orientierung der an die Positionierhilfsmittel gekoppelten Strukturen nicht möglich ist, kann oftmals erreicht werden, dass die an die Positionierhilfsmittel angekoppelten Strukturen eine feste Orientierung in der Probe aufweisen. Dann kann nach einem erstmaligen Bestimmen der Positionen der Fluoreszenzmarker überprüft werden, welche der Strukturen so orientiert sind, dass die Abstände ihrer mit den Fluoreszenzmarkern markierten Bereiche in der Haupterstreckungsebene der Probe verlaufen. Bei wiederholtem Durchführen des Bestimmens der Positionen der Fluoreszenzmarker, um beispielsweise Reaktionen der Strukturen auf veränderte Umgebungsbedingungen zu erfassen, kann das erfindungsgemäße Verfahren danach auf die Strukturen beschränkt werden, die die gewünschte Orientierung aufweisen, während andere Strukturen, die diese Orientierung nicht aufweisen, nicht weiter berücksichtigt werden. Dies ist insbesondere sinnvoll, um schnell aussagekräftige Informationen über Reaktionen der Strukturen auf geänderte Umgebungsbedingungen zu erfassen.

Weiterhin ist es bevorzugt, wenn die Positionen der Positionierhilfsmittel in Mindestabständen zueinander angeordnet werden, die mindestens doppelt so groß wie die Beugungsgrenze bei der Wellenlänge des Anregungslichts und des Fluoreszenzlichts sind. Damit kann das Fluoreszenzlicht aus der Probe den einzelnen Nahbereichen und damit den einzelnen zu messenden nanoskaligen Strukturen mit optischen Mitteln getrennt zugeordnet werden. Wenn die Positionen der Positionierhilfsmittel willkürlich festgelegt werden, indem sie beispielsweise in einem vordefinierten Muster in der Probe angeordnet werden, kann der genannte Mindestabstand von der doppelten Beugungsgrenze bei der Wellenlänge des Anregungslichts und der Wellenlänge des Fluoreszenzlichts direkt eingehalten werden. Wenn jedoch die Positionierhilfsmittel zufällig in der Probe verteilt werden, muss mit einer geringen Dichte der Positionierhilfsmittel dafür Sorge getragen werden, dass ihre Abstände nicht kleiner als die doppelte Beugungsgrenze bei der Wellenlänge des Anregungslichts und der Wellenlänge des Fluoreszenzlichts sind. Dies erfordert in aller Regel eine Dichte die deutlich kleiner als der Kehrwert der doppelten Beugungsgrenze bei der Wellenlänge des Anregungslichts und der Wellenlänge des Fluoreszenzlichts ist. Alternativ oder zusätzlich können die Positionierhilfsmittel auf die zwischen ihnen vorliegenden Abstände überprüft werden. Danach können die Positionierhilfsmittel, deren Positionen als zu dicht beieinanderliegend erkannt wurden, und die an sie angekoppelten nanoskaligen Strukturen bei der weiteren Durchführung des erfindungsgemäßen Verfahrens unberücksichtigt bleiben.

Wenn die Positionen der Positionierhilfsmittel in einem vordefinierten Muster in der Probe angeordnet werden, kann das vordefinierte Muster insbesondere aus periodischen und noch spezieller aus hexagonalen und quadratischen Mustern ausgewählt werden. Dann sind auch die bei der Durchführung des erfindungsgemäßen Verfahrens anzufahrenden Nahbereiche in einem solchen periodischen, hexagonalen oder quadratischen Muster angeordnet. In einem hexagonalen Muster ist die Dichte der Positionierhilfsmittel, die die Mindestabstände von der doppelten Beugungsgrenze bei der Wellenlänge des Anregungslichts und der Wellenlänge des Fluoreszenzlichts einhalten, maximiert.

Bei dem erfindungsgemäßen Verfahren nach dem unabhängigen Patentanspruch 3 wird das aus der WO 2014/108455 A1 bekannte Konzept, die aktuell nicht gemessenen Fluoreszenzmarker durch Schalten in einen inaktiven Zustand vor den hohen Intensitäten im Bereich der an das lokale Minimum angrenzenden Maxima zu schützen, in abgewandelter Form angewandt. Konkret wird vor dem Anordnen des lokalen Minimums in dem jeweiligen Nahbereich zusätzliches Ausschaltlicht mit einer solchen Intensitätsverteilung auf die Probe gerichtet, dass es die schaltbaren Fluoreszenzmarker möglichst nicht in dem Nahbereich, aber in an den Nahbereich angrenzenden Teilbereichen der Probe in einen inaktiven Zustand ausschaltet. Damit werden die Fluoreszenzmarker dort in den inaktiven Zustand geschaltet, wo die Maxima des Anregungslichts bzw. des weiteren Lichts auftreten und wo ohne diese Schutzmaßnahme die Fluoreszenzmarker durch die hohen Intensitäten des Anregungslichts bzw. des weiteren Lichts belastet würden und von wo sie nur die aktuelle Messung beeinträchtigendes Fluoreszenzlicht emittieren würden. Die absolute Dichte der nanoskaligen Strukturen in der Probe kann dann besonders hoch sein, ohne dass das Messen jeder nanoskaligen Struktur, die ihr benachbarten nanoskaligen Strukturen photochemisch belasten muss oder Fluoreszenzlicht von den benachbarten nanoskaligen Strukturen die aktuelle Messung stört.

Bei dem erfindungsgemäßen Verfahren nach dem unabhängigen Patentanspruch 4, das von dem bekannten PAINT (Point Accumulation for Imaging in Nanoscale Topography)-Konzept inspiriert ist, werden die Fluoreszenzmarker aus Fluoreszenzmarkern ausgewählt, die in der Probe beweglich sind und die sich einzeln an verschiedenen Stellen an die Struktur anlagern. Diese Fluoreszenzmarker werden der Probe in solcher Konzentration und/oder in einer solchen räumlichen Verteilung zugesetzt, dass sie sich nacheinander einzeln an die Struktur anlagern. Wenn sie an die Struktur angelagert ist, wird ihre Position erfindungsgemäß bestimmt. Bei dieser Ausführungsform des erfindungsgemäßen Verfahrens wird also dieselbe Vereinzelung der Fluoreszenzmarker wie bei dem PAINT-Konzept angewandt. Entsprechend können auch alle für das PAINT-Konzept bekannten Varianten dieser Vereinzelung bei dieser Ausführungsform des erfindungsgemäßen Verfahrens umgesetzt werden. So können die Fluoreszenzmarker erst bei ihrem Anlagern an die Struktur aus einem inaktiven Zustand, in dem sie mit dem Anregungslicht nicht zur Emission von Fluoreszenzlicht anregbar sind, in einen aktiven Zustand, in dem sie mit dem Anregungslicht zur Emission von Fluoreszenzlicht anregbar sind, überführt werden. Alternativ oder zusätzlich lagern sich die Fluoreszenzmarker nur temporär an die Struktur an, und/oder sie werden bei längerem Einwirken des Anregungslichts und/oder des Fluoreszenzverhinderungslichts oder mittels weiterem Licht anhaltend, d. h. zumindest so lange in einen Dunkelzustand überführt, dass sie das weitere Messen der jeweiligen nanoskaligen Struktur nicht stören.

In einer Ausführungsform des erfindungsgemäßen Verfahrens werden die Positionen der einzelnen Fluoreszenzmarker zusätzlich durch MINFLUX-Mikroskopie bestimmt. Dies bedeutet, dass zusätzlich die folgenden Schritte durchgeführt werden: Anregen der Fluoreszenzmarker mit Anregungslicht zur Emission von Fluoreszenzlicht, wobei die Intensitätsverteilung des Anregungslichts das lokale Minimum aufweist, das an verschiedenen Positionen in der Probe angeordnet wird, Registrieren des aus der Probe emittierten Fluoreszenzlichts getrennt für die einzelnen Fluoreszenzmarker und für die verschiedenen Positionen des Minimums der Intensitätsverteilung des Anregungslichts, und Bestimmen der Positionen der einzelnen Fluoreszenzmarker in der Probe aus den für den jeweiligen Fluoreszenzmarker für die verschiedenen Positionen des Minimums der Intensitätsverteilung des Anregungslichts registrierten Intensitäten des Fluoreszenzlichts.

In den zusätzlichen Schritten dieser Ausführungsform des erfindungsgemäßen Verfahrens können mit dem Minimum der Intensitätsverteilung des Anregungslichts dieselben Positionen in dem Nahbereich angefahren werden wie zuvor oder danach mit dem Minimum der Intensitätsverteilung des Fluoreszenzverhinderungslichts. Dies ist jedoch nur eine Option.

In den zusätzlichen Schritten dieser Ausführungsform des erfindungsgemäßen Verfahrens werden die vereinzelten Fluoreszenzmarker nur mit einer minimalen Lichtmenge beaufschlagt und dadurch nur minimal photochemisch belastet.

Bei der Ausführungsform des erfindungsgemäßen Verfahrens, bei der die Intensitätsverteilung des Anregungslichts das lokale Minimum aufweist, ist das lokale Extremum einer räumlichen Funktion, die zum Bestimmen der Position des jeweiligen Fluoreszenzmarkers an die Intensitäten des von ihm stammenden Fluoreszenzlichts angefittet wird, ebenfalls ein lokales Minimum.

Weiter können bei der Ausführungsform des erfindungsgemäßen Verfahrens zueinander komplementäre Intensitätsverläufe des von den einzelnen Fluoreszenzmarkern aus der Probe emittierten Fluoreszenzlichts, die sich einerseits über den verschiedenen Positionen des Minimums der Intensitätsverteilung des Fluoreszenzverhinderungslichts und andererseits über den verschiedenen Positionen des Minimums der Intensitätsverteilung des Anregungslichts in der Probe ergeben, beim Bestimmen der Positionen der einzelnen Fluoreszenzmarker in der Probe miteinander abgeglichen werden. Durch die gleichzeitige Betrachtung der komplementäre Intensitätsverläufe kann die Position des jeweiligen Fluoreszenzmarkers in der Probe mit höherer Genauigkeit bestimmt werden als auf Basis der beiden Intensitätsverläufe, wenn diese nur getrennt ausgewertet werden.

Weiterhin können Positionen der einzelnen Fluoreszenzmarker in der Probe, die aus den Intensitäten des Fluoreszenzlichts bestimmt werden, die für den jeweiligen Fluoreszenzmarker für die verschiedenen Positionen des Minimums der Intensitätsverteilung des Fluoreszenzverhinderungslichts registriert wurden, bei der Festlegung der Positionen berücksichtigt werden, an denen anschließend das andere Minimums der Intensitätsverteilung des Anregungslichts angeordnet wird, und umgekehrt. Bei der iterativen Bestimmung der Positionen der einzelnen Fluoreszenzmarker mit zunehmender Genauigkeit kann also schrittweise zwischen einer STED- und einer MINFLUX-Konstellation gewechselt werden.

Eine Vorrichtung zur Durchführung des erfindungsgemäßen Verfahrens weist beispielsweise folgende Bestandteile auf:
- einen Probenhalter für die Probe,
- ein auf den Probenhalter gerichtetes Objektiv,
- eine Anregungslicht und Fluoreszenzverhinderungslicht derart in die Probe einkoppelnde Lichtquelle, das eine Intensitätsverteilung des mit dem Objektiv fokussierten Fluoreszenzverhinderungslichts ein lokales Minimum aufweist,
- eine Abtasteinrichtung, die dazu ausgebildet ist, eine Position des Minimums gegenüber dem Probenhalter zu verlagern,
- einen Detektor, der dazu ausgebildet ist, aus der Probe emittiertes Fluoreszenzlicht für die verschiedenen Positionen des Minimums getrennt zu registrieren,
- eine Auswerteeinrichtung, die dazu ausgebildet ist, Positionen von Fluoreszenzmarkern in der Probe aus dem die verschiedenen Positionen des Minimums registrierten Intensitäten des Fluoreszenzlichts zu bestimmen, und
- eine Steuerung zur automatischen Durchführung des erfindungsgemäßen Verfahrens.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von zwei Fluoreszenzmarkern die Rede ist, ist dies so zu verstehen, dass genau zwei Fluoreszenzmarker oder mehr Fluoreszenzmarker verwendet werden. Die in den Patentansprüchen angeführten Merkmale können durch weitere Merkmale ergänzt werden oder die einzigen Merkmale sein, die das jeweilige Verfahren oder die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Ablaufdiagramm einer Ausführungsform des erfindungsgemäßen Verfahrens.
- **Fig. 2**: zeigt schematisch das Ankoppeln einer nanoskaligen Struktur an ein Positionierhilfsmittel und die Reaktion der nanoskaligen Struktur auf eine zugegebene Substanz.
- **Fig. 3**: erläutert die Positionierung eines Minimums einer Intensitätsverteilung von Fluoreszenzverhinderungslicht gegenüber dem Positionierhilfsmittel bei einer Ausführungsform des erfindungsgemäßen Verfahrens.
- **Fig. 4**: illustriert die Intensitätsverteilung des Anregungslichts bei zusätzlichen Schritten einer MINFLUX-Ausführungsform des erfindungsgemäßen Verfahrens in einer Draufsicht und in einem Schnitt durch das Minimum.
- **Fig. 5**: zeigt eine Probe mit in einem quadratischen Muster angeordneten Positionierhilfsmittel.
- **Fig. 6**: zeigt schematisch eine Vorrichtung zur Durchführung des erfindungsgemäßen Verfahrens und
- **Fig. 7**: illustriert die Intensitätsverteilung des Anregungslichts und von Fluoreszenzverhinderungslicht bei einer Ausführungsform des erfindungsgemäßen Verfahrens in einem Schnitt durch das Minimum.

### FIGURENBESCHREIBUNG

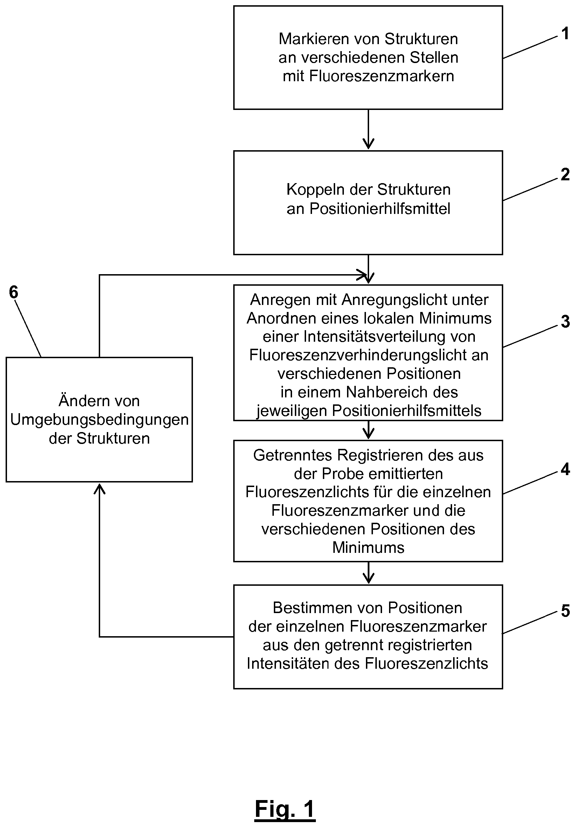

Das in **Fig. 1** in einem Ablaufdiagramm dargestellte erfindungsgemäße Verfahren beginnt mit einem Markieren 1 von nanoskaligen Strukturen an verschiedenen Stellen mit Fluoreszenzmarkern. Das heißt, jede der nanoskaligen Strukturen wird an mindestens zwei ausgewählten und bei gleichen Strukturen auch gleichen Stellen mit jeweils einem Fluoreszenzmarker markiert. Die an den verschiedenen Stellen der jeweiligen Struktur angebrachten Fluoreszenzmarker können dabei identisch sein, soweit sie einen aktiven und einen inaktiven Zustand aufweisen, zwischen denen sie überführbar sind, oder sie unterscheiden sich in ihren spektralen Eigenschaften bezüglich des Anregungslichts, mit dem sie zur Emission von Fluoreszenzlicht anregbar sind, und/oder des von ihnen infolge der Anregung emittierten Fluoreszenzlichts.

Ein Koppeln 2 der nanoskaligen Strukturen an Positionierhilfsmittel ist in Fig. 1 als nachfolgender Schritt zu dem Markieren 1 gezeigt. Das Koppeln 2 der Strukturen an die Positionierhilfsmittel kann aber dem Markieren 1 der Strukturen auch vorausgehen. Weiter ist es möglich, dass das Markieren 1 und das Koppeln 2 gleichzeitig erfolgen. In jedem Fall liegen nach dem Markieren 1 und dem Koppeln 2 jeweils mehrfach markierte nanoskalige Strukturen vor, die einzeln an einzelne Positionierhilfsmittel gekoppelt sind. Die Positionen der Positionierhilfsmittel in einer Probe sind dabei entweder bekannt, was impliziert, dass sie fest sind, und/oder sie sind aus Licht, das von den Positionierhilfsmitteln reflektiert wird, weil sie beispielsweise Gold- oder Silberpartikel oder Quantum Dots umfassen, bestimmbar. Dieses Bestimmen der Positionen der Positionierhilfsmittel kann somit ohne Beanspruchung der Fluoreszenzmarker durch Anregung und Emission von Fluoreszenzlicht erfolgen. So lange ihre aktuellen Positionen immer bestimmbar sind, ist es auch möglich, dass die Positionierhilfsmittel in der Probe nicht fest liegen, sondern sich bewegen können. Bei nicht festen Positionen der Positionierhilfsmittel in der Probe ist es jedoch schwieriger einzuhalten, dass Abstände der Positionierhilfsmittel in der Probe nicht kleiner werden als die doppelte Beugungsgrenze bei der Wellenlänge des Anregungslichts und des Fluoreszenzlichts, um das von dem Fluoreszenzmarkern an den einzelnen Strukturen stammende Fluoreszenzlicht jeweils sicher einem bestimmten Positionierhilfsmittel und damit der daran gekoppelten Struktur zuordnen zu können.

Bei einem Anregen 3 der Fluoreszenzmarker mit Anregungslicht zur Emission von Fluoreszenzlicht unter Anordnen eines lokalen Minimums einer Intensitätsverteilung von Fluoreszenzverhinderungslicht an verschiedenen Positionen in einem Nahbereich des jeweiligen Positionierhilfsmittels kann eine Intensitätsverteilung des Anregungslichts ein Maximum an dem jeweiligen Ort des lokalen Minimums aufweisen. Wenn das lokale Minimum der Intensitätsverteilung des Fluoreszenzverhinderungslichts mit dem Maximum der Intensitätsverteilung des Anregungslichts in dem Nahbereich des jeweiligen Positionierhilfsmittels angeordnet wird, emittieren die in ihrem aktiven Zustand befindlichen Fluoreszenzmarker, die sich mit dem Anregungslicht anregen lassen, Fluoreszenzlicht. Dabei ist die Intensität des Fluoreszenzlichts von dem Abstand des jeweiligen Fluoreszenzmarkers zu dem lokalen Minimum der Intensitätsverteilung des Fluoreszenzverhinderungslichts abhängig. Wenn ein Registrieren 4 des emittierten Fluoreszenzlichts so erfolgt, dass das Fluoreszenzlicht für jeden der Fluoreszenzmarker separat registriert wird, weil das Fluoreszenzlicht von verschiedenen Fluoreszenzmarkern aufgrund unterschiedlicher Wellenlängen trennbar ist und/oder jeweils nur einer der Fluoreszenzmarker aktiv ist, ist ein Bestimmen 5 der Position der einzelnen Fluoreszenzmarker aus den Intensitäten des für die verschiedenen Positionen des Minimums registrierten Fluoreszenzlichts von dem jeweiligen Fluoreszenzmarker möglich. Dabei hängt die Genauigkeit dieses Bestimmens 5 bei gleicher Anzahl der registrierten Photonen des Fluoreszenzlichts davon ab, wie dicht die Positionen des lokalen Minimums bereits an der Position des Fluoreszenzmarkers liegen. Indem die Positionen des lokalen Minimums beim Anregen 3 in einem Nahbereich des jeweiligen Positionierhilfsmittels angeordnet werden, in dem sich auch die angekoppelte Struktur und die daran angebrachten Fluoreszenzmarker befinden, hängt die relative Genauigkeit beim Bestimmen 5 der Positionen der Fluoreszenzmarker von der Größe dieses Nahbereichs ab.

Soweit die Position des Positionierhilfsmittels sehr genau bekannt ist, beispielsweise mindestens auf ± 40 nm oder ± 20 nm oder ± 10 nm oder ± 5 nm, und das Koppeln 2 der Strukturen an die Positionierhilfsmittel so erfolgt, dass diese einen maximalen Abstand in derselben Größenordnung zu der Position des Positionierhilfsmittels aufweisen, kann der Nahbereich des jeweiligen Positionierhilfsmittel, in dem die Position des Minimums angeordnet werden, entsprechend klein gehalten werden. Wenn die Positionen aller Fluoreszenzmarker, mit denen die jeweilige Struktur markiert ist, bestimmt sind, wobei es insbesondere um relative Positionen der Fluoreszenzmarker zueinander, d. h. deren Abstände geht, ist die jeweilige Struktur ge- oder vermessen. Dieses Messen oder Vermessen kann nach oder während eines Änderns 6 von Umgebungsbedingungen der Strukturen wiederholt werden. Dabei können die Umgebungsbedingungen aller Strukturen in der Probe in gleicher Weise geändert werden. Auf diese Weise können beispielsweise die Reaktionen unterschiedlicher nanoskaliger Strukturen auf dieselbe Änderung der Umgebungsbedingungen erfasst werden. Alternativ kann das Ändern 6 der Umgebungsbedingungen in unterschiedlichen Bereichen der Probe und damit beispielsweise für gleiche Strukturen in unterschiedlicher Weise erfolgen. Beispielsweise können in verschiedenen Bereichen der Probe verschiedene Substanzen zu gleichen Strukturen hinzugefügt werden, um die unterschiedlichen Reaktion der Strukturen auf diese Substanzen zu erfassen. Dies kann beispielsweise im Rahmen eines Drug Screenings erfolgen. Unabhängig davon, ob die Strukturen in der Probe gleich oder verschieden sind, erfolgt auf das Ändern 6 der Umgebungsbedingungen der Strukturen ein erneutes Messen oder Vermessen der Strukturen durch Ausführung der Schritte Anregen 3, Registrieren 4 und Bestimmen 5.

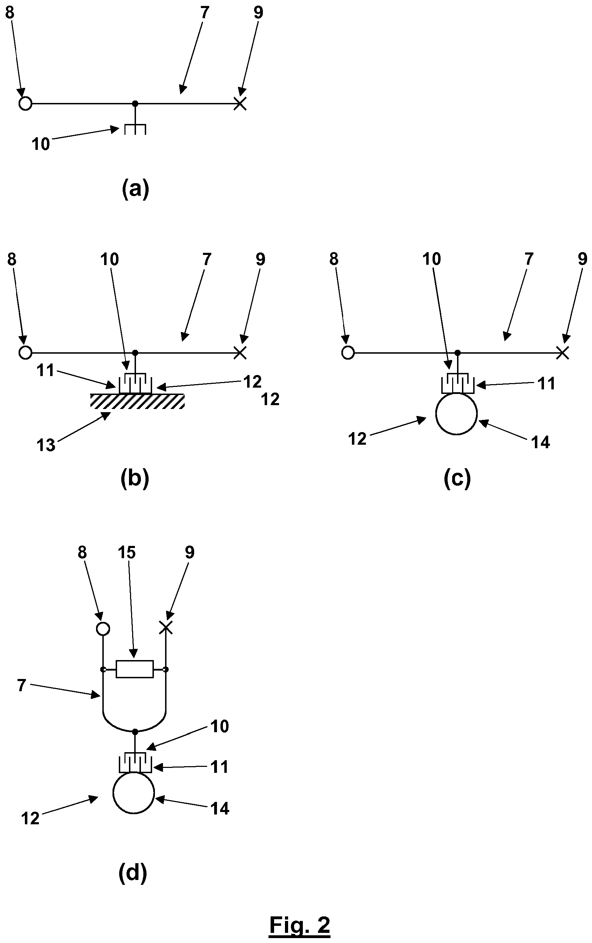

**Fig. 2 (a)** zeigt sehr schematisch ein Beispiel für eine nanoskalige Struktur 7, die an ihren beiden Enden mit jeweils einem Fluoreszenzmarker 8 bzw. 9 markiert ist. Die Fluoreszenzmarker 8 und 9 sind hier unterschiedlich dargestellt. Wie bereits ausgeführt, kann es sich jedoch auch um gleiche Fluoreszenzmarker handeln, wenn diese zwischen einem aktiven und einem inaktiven Zustand überführbar sind. Dies kann beispielsweise mit zusätzlichem Schaltlicht erfolgen, dass die Fluoreszenzmarker 8 und 9 nach Übergangswahrscheinlichkeiten in ihren aktiven oder inaktiven Zustand überführt, so dass durch wiederholtes Aufbringen des Schaltlichts Schaltzustände erreicht werden, in denen einmal nur der eine Fluoreszenzmarker 8 und einmal nur der andere Fluoreszenzmarker 9 aktiv ist. Weiter ist an der Struktur 7 eine zentrale Ankoppelstelle 10 ausgebildet. Die Ankoppelstelle 10 ist zur Ankopplung an einen entsprechenden Ankoppelplatz 11 eines Positionierhilfsmittels 12 ausgebildet.

**Fig. 2 (b)** zeigt die Ankoppelstelle 10 angekoppelt an den Ankoppelplatz 11 eines Positionierhilfsmittels 12, das hier nur aus dem Ankoppelplatz 11 besteht, der gegenüber der restlichen Probe 13 festliegt.

**Fig. 2 (c)** zeigt hingegen die Struktur 7 über die Ankoppelstelle 10 angekoppelt an ein Positionierhilfsmittel 12, das neben dem Ankoppelplatz 11 einen Goldpartikel 14 umfasst. Mithilfe von Licht, das von dem Goldpartikel 14 reflektiert wird, ist auch eine sich ändernde Position des Positionierhilfsmittels 12 in der jeweiligen Probe erfassbar, ohne dass die Fluoreszenzmarker 8 und 9 dabei durch Anregen mit Anregungslicht und Emittieren von Fluoreszenzlicht beansprucht werden.

**Fig. 2 (d)** zeigt die an das Positionierhilfsmittel 12 gemäß Fig. 2 (c) angekoppelte Struktur 7, die infolge des Einwirkens einer Substanz 15 als Beispiel für geänderte Umgebungsbedingungen der Struktur 7 verändert ist. Konkret besteht die Veränderung in einem Zusammenfalten der Enden der Struktur 7, so dass sich der Abstand der dort angebrachten Fluoreszenzmarker 8 und 9 verringert. So kann die Reaktion der Struktur 7 auf die Substanz 15 durch Vermessen des Abstands der Fluoreszenzmarker 8 und 9 direkt erfasst werden.

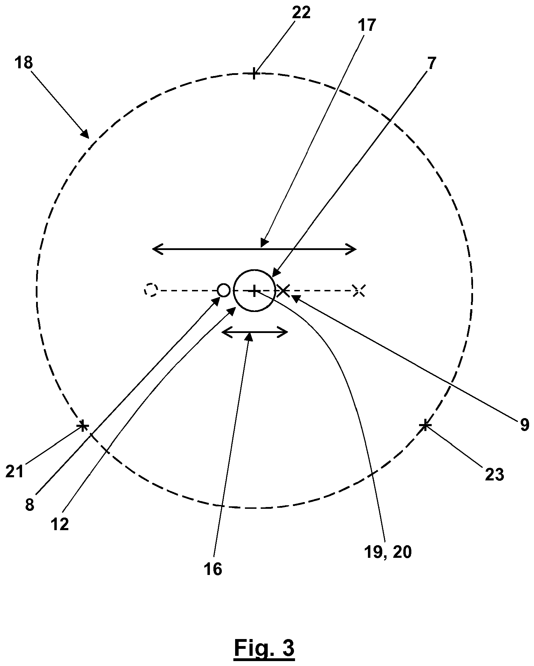

**Fig. 3** zeigt die Struktur 7 mit dem Positionierhilfsmittel 12 aus einer Blickrichtung orthogonal zu dem Abstand ihrer beiden Enden, wobei neben dem verringerten Abstand 16 gemäß Fig.2 (d) auch der Ausgangsabstand 17 bei gestreckter Struktur 7 gemäß den Fig. 2 (c) eingezeichnet ist. Weiter ist in Fig. 3 ein Nahbereich 18 um eine bekannte oder zuvor bestimmte Position 19 des Positionierhilfsmittels 12 dargestellt. In diesem Nahbereich wird das lokale Minimum der Intensitätsverteilung des Fluoreszenzverhinderungslichts beim Anregen des jeweiligen aktiven Fluoreszenzmarkers 8, 9 an vier verschiedene Positionen 20 bis 23 angeordnet, wobei die Position 20 mit der Position 19 des Positionierhilfsmittels 12 zusammenfällt und die Position 21 bis 23 auf einem um die Position 19, 20 verlaufenden Kreisbogen äquidistant angeordnet sind. Zu jeder Position 20 bis 23 wird das Fluoreszenzlicht von dem jeweiligen Fluoreszenzmarker 8, 9 separat bestimmt. Dann lässt sich aus den Intensitäten des registrierten Fluoreszenzlichts die Position des jeweiligen Fluoreszenzmarkers 8, 9 in dem Nahbereich sehr genau bestimmen. Die Genauigkeit der Bestimmung hängt von der Größe des Nahbereichs, d. h. seinen Abmessungen, insbesondere in Form seines Durchmessers ab, der gegenüber Fig. 3 auch halbiert sein könnte. Dies würde jedoch auch voraussetzen, dass die Position 19 des Positionierhilfsmittels 12 mit extremer Genauigkeit bekannt wäre und tatsächlich immer mit dem Zentrum der Struktur 7 zusammenfällt. Um hier auftretende Ungenauigkeiten und Varianten abzudecken, ist der Nahbereich 18 größer zu wählen, als dies unter idealen Randbedingungen erforderlich erscheint.

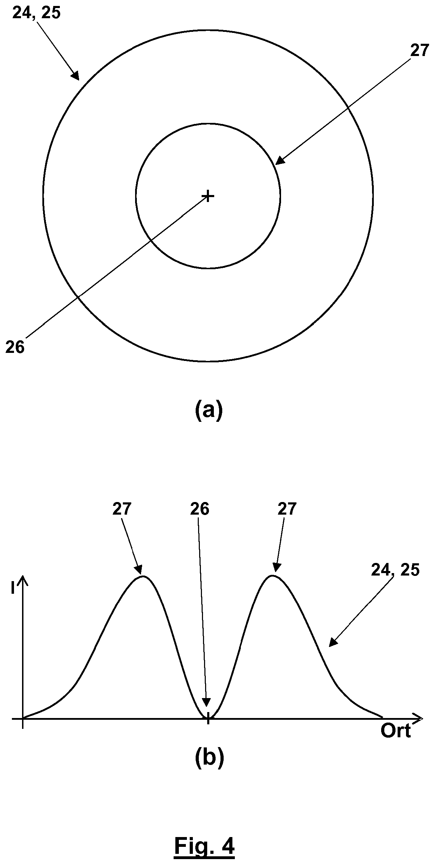

**Fig. 4** zeigt eine Intensitätsverteilung 24 von Anregungslicht 25 mit einem zentralen lokalen Minimum 26 in einer Draufsicht **(a)** mit der Blickrichtung von Fig. 3 und einem dazu senkrecht durch das lokale Minimum 26 verlaufenden Schnitt **(b)**. Das lokale Minimum 26 ist allseitig von einem Maximum 27 der Intensitätsverteilung umschlossen. In dem lokalen Minimum 26 geht die Intensität des Anregungslichts 25 idealerweise auf null zurück. Mit zunehmenden Abstand zu dem Minimum 26 steigt die Intensität I zunächst etwa quadratisch an, bis sie in dem ringförmigen Maximum 27 ihren Maximalwert erreicht. Bei den zusätzlichen Schritten einer MINFLUX-Ausführungsform des erfindungsgemäßen Verfahrens wird von dieser Intensitätsverteilung 24 der Bereich unmittelbar um das Minimum 26 genutzt, in dem die Intensität I quadratisch ansteigt, so dass die mit der Intensität I korrelierte Intensität des von dem jeweiligen Fluoreszenzmarker emittierten und registrierten Fluoreszenzlichts einen eindeutigen Rückschluss auf die Entfernung des Fluoreszenzmarkers von dem Minimum 26 zulässt. Aus mehreren solcher Entfernungen, die für mehrere Positionen des Minimums 26 in dem jeweiligen Nahbereich bestimmt werden, lässt sich daher die genaue Position des Fluoreszenzmarkers beispielsweise durch Triangulation aber noch besser durch Anfitten einer ein lokales Minimum aufweisenden Funktion an die Intensitäten des zu den einzelnen Positionen des Minimums registrierten Fluoreszenzlichts bestimmen.

Die das lokale Minimum aufweisende räumliche Funktion, die bei den zusätzlichen Schritten der MINFLUX-Ausführungsform des erfindungsgemäßen Verfahrens an die Intensitäten des zu den einzelnen Positionen des Minimums registrierten Fluoreszenzlichts anzufitten ist, beschreibt die Abhängigkeit der Intensität des Fluoreszenzlichts von dem Abstand des jeweiligen Fluoreszenzmarkers zu dem lokalen Minimum 26. Entsprechend kann diese Funktion durch Abtasten desselben oder eines gleichartigen Fluoreszenzmarkers oder auch eines Licht reflektierenden Positionierhilfsmittels gleichen Wirkungsquerschnitts bestimmt werden. Dabei bedeutet Abtasten, dass das lokale Minimum 26 hierbei tatsächlich in kleinen Schritten verlagert wird, beispielsweise in mindestens 5x5 Schritten oder 10x10 Schritten, um den Verlauf einer zweidimensionalen Funktion zu bestimmen.

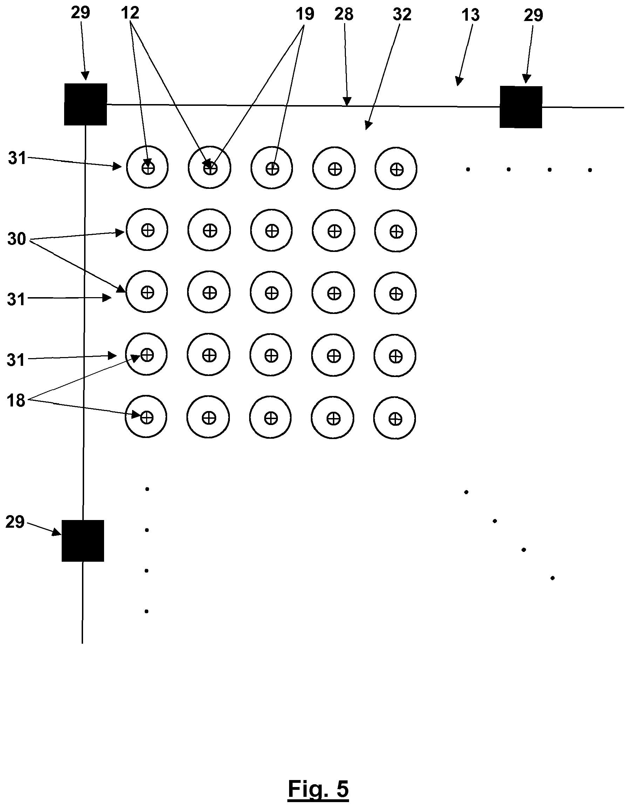

**Fig. 5** zeigt eine Probe 13 zur Durchführung einer Drug Screening Ausführungsform des erfindungsgemäßen Verfahrens. Die Probe 13 weist an ihrem Außenumfang 28 Fixpunkte 29 für das Positionieren der Probe 13 auf einem Probenhalter auf. Gegenüber den Fixpunkten 29 ist eine Vielzahl von Positionierhilfsmitteln 12 bezüglich deren Positionen 19 in einem quadratischen Muster angeordnet. Jedes Positionierhilfsmittel 12 befindet sich dabei in einer Vertiefung oder einem sogenannten Loch 30 der Probe 13. Die entsprechend in Zeilen 31 und Spalten 32 angeordneten Löchern 30 erlauben das Zugeben einer Substanz selektiv zu einer an das Positionierhilfsmittel 12 in dem jeweiligen Loch 30 in der Probe 13 angekoppelten Struktur. So können Reaktionen gleicher oder ungleicher Strukturen auf verschiedene Substanzen erfasst werden. Dazu werden die Strukturen vor und nach und evtl. auch während des Zugebens der Substanzen gemäß dem erfindungsgemäßen Verfahren vermessen, wobei die Positionen des Minimums 26 der Intensitätsverteilung 24 gemäß Fig. 4 jeweils direkt in dem Nahbereich 18 um die jeweilige Position 19 des Positionierhilfsmittels angeordnet wird. So ist die Reaktion der jeweiligen Struktur mit hoher Geschwindigkeit, geringer Anzahl der je Fluoreszenzmarker emittierten Photonen und dennoch hoher Genauigkeit erfassbar.

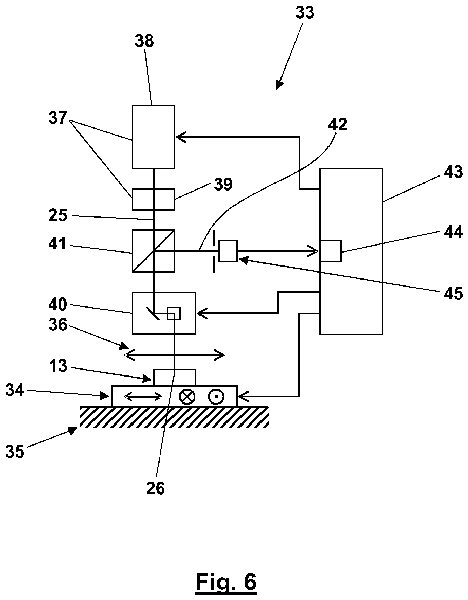

**Fig. 6** zeigt eine Vorrichtung 33 zur Durchführung des erfindungsgemäßen Verfahrens. Die Vorrichtung 33 weist einen Probenhalter 34 für die Probe 13 auf, mit dem die Probe 13 gegenüber einer Basis 35 verfahrbar ist, um sie gegenüber den weiteren basisfesten Bestandteilen der Vorrichtung 33 zu positionieren. Dieses Positionieren dient insbesondere zum Anfahren des jeweiligen Nahbereichs 18 um das jeweilige Positionierhilfsmittel. Konkret erfolgt die Positionierung gegenüber einer Intensitätsverteilung des Anregungslichts 25, das mit einem Objektiv 36 in die Probe fokussiert wird. Das Anregungslicht 25 wird von einer Lichtquelle 37 so bereitgestellt, dass sich beim Fokussieren mit dem Objektiv 36 die Intensitätsverteilung gemäß Fig. 4 in der Probe 13 einstellt. Dazu weist die Lichtquelle 37 neben einem Laser 38 Strahlformungsmittel 39 beispielsweise in Form einer sogenannten easySTED-Platte auf. Eine Abtasteinrichtung 40, die auch als Scanner bezeichnet wird, ist dazu vorgesehen, das Minimum 26 in der Probe innerhalb des jeweiligen Nahbereichs 18 zu verlagern. Ein zwischen der Lichtquelle 37 und der Abtasteinrichtung 40 angeordneter dichroitischer Strahlteiler 41 koppelt Fluoreszenzlicht 42 aus der Probe 13 zu einem konfokal angeordneten Detektor 42 aus. Eine Steuerung 43 steuert die Vorrichtung 33 zur automatischen Durchführung des erfindungsgemäßen Verfahrens, insbesondere bei einem Drug Screening. Dabei kann die Vorrichtung 33 auch eine in Fig. 6 nicht dargestellte Zusatzvorrichtung aufweisen, um unterschiedliche Substanzen in die einzelnen Löcher 30 hineinzugeben. Die Steuerung 43 umfasst eine Auswerteeinrichtung 44, die die Positionen der einzelnen Fluoreszenzmarker in der Probe aus den für den jeweiligen Fluoreszenzmarker für die verschiedenen Positionen des Minimums registrierten Intensitäten des Fluoreszenzlichts bestimmt.

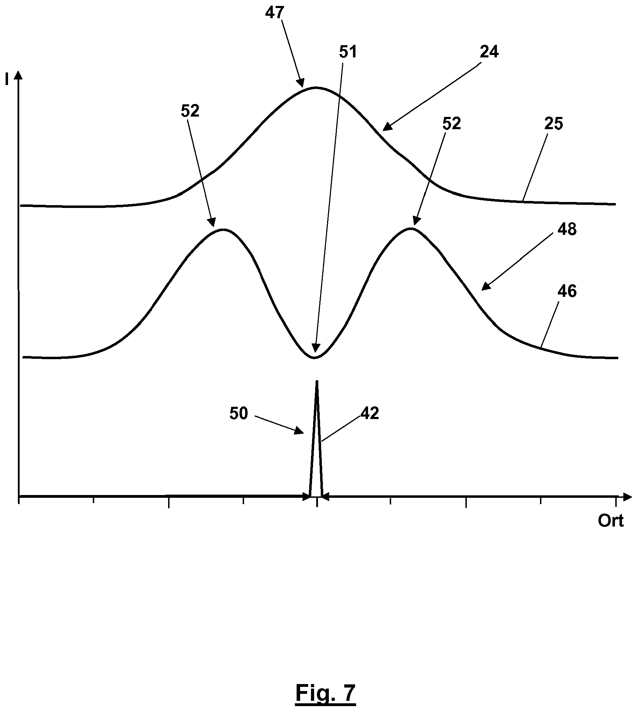

**Fig. 7** illustriert das erfindungsgemäße Verfahren, bei dem nicht die Intensitätsverteilung 24 des Anregungslichts 25 das lokale Minimum 26 aufweist, sondern eine Intensitätsverteilung 48 von Fluoreszenzverhinderungslicht 46 ein lokales Minimum 51. Dabei ist das von Intensitätsmaxima 52 umgebene lokale Minimum 51 der Intensitätsverteilung 48 konzentrisch zu einem lokalen Maximum 47 der Intensitätsverteilung 24 des Anregungslichts 25 angeordnet. Hieraus resultiert eine räumlich begrenzte Verteilung 50 der Intensität des von dem jeweiligen Fluoreszenzmarker emittierten Fluoreszenzlichts 42 über dessen Abstand zu dem lokalen Minimum 26. Dabei ist die in Fig. 7 dargestellte Verteilung 50 Resultat einer Intensitätsverteilung 48 mit extrem hohen Intensitäten des Fluoreszenzverhinderungslichts 46 in den Maxima 52. Anders gesagt ist die Lichtintensitätsverteilung 48 in Fig. 7 in stark verkleinertem Maßstab dargestellt. Unter Verwendung der Verteilung 50 kann aus dem zu verschiedenen Positionen des lokalen Minimums 51 registrierten Fluoreszenzlicht 42 auf die Position des vereinzelten, das Fluoreszenzlicht 42 emittierenden Fluoreszenzmarkers geschlossen werden. Dazu kann eine die Verteilung 50 wiedergebende räumliche Funktion mit einem lokalen Maximum an die Intensitäten des registrierten Fluoreszenzlichts angefittet wird. Diese räumliche Funktion kann ebenfalls durch Abtasten des jeweiligen Fluoreszenzmarkers oder eines gleichartigen Fluoreszenzmarkers oder eines Positionierungshilfsmittels gleichen Wirkungsquerschnitts mit dem lokalen Minimum 51 und Registrieren des dabei aus der Probe emittierten Fluoreszenzlichts 42 bestimmt werden.

### BEZUGSZEICHENLISTE

- 1: Markieren
- 2: Koppeln
- 3: Anregen
- 4: Registrieren
- 5: Bestimmen
- 6: Ändern
- 7: Struktur
- 8: Fluoreszenzmarker
- 9: Fluoreszenzmarker
- 10: Ankoppelstelle
- 11: Ankoppelplatz
- 12: Positionierhilfsmittel
- 13: Probe
- 14: Goldpartikel
- 15: Substanz
- 16: Abstand
- 17: Abstand
- 18: Nahbereich
- 19: Position des Positionierhilfsmittels
- 20: Position des Minimums
- 21: Position des Minimums
- 22: Position des Minimums
- 23: Position des Minimums
- 24: Intensitätsverteilung
- 25: Anregungslicht
- 26: Minimum des Anregungslichts
- 27: Maximum des Anregungslichts
- 28: Außenumfang
- 29: Fixpunkt
- 30: Loch
- 31: Zeile
- 32: Spalte
- 33: Vorrichtung
- 34: Probenhalter
- 35: Basis
- 36: Objektiv
- 37: Lichtquelle
- 38: Laser
- 39: Strahlformungsmittel
- 40: Abtasteinrichtung
- 41: dichroitischer Strahlteiler
- 42: Fluoreszenzlicht
- 43: Steuerung
- 44: Auswerteeinrichtung
- 45: Detektor
- 46: Fluoreszenzverhinderungslicht
- 47: Maximum des Anregungslichts
- 48: Intensitätsverteilung
- 50: Verteilung
- 51: Minimum des Fluoreszenzverhinderungslichts
- 52: Maxmum des Fluoreszenzverhinderungslichts
- I: Intensität

## Patentansprüche

1. Verfahren zum räumlichen Messen einer nanoskaligen Struktur in einer Probe (13) mit den Schritten:
- Markieren (1) der Struktur an verschiedenen Stellen mit Fluoreszenzmarkern (8, 9), die ausgewählt werden aus Fluoreszenzmarkern (8, 9), die sich in ihrem Anregungsspektrum und/oder ihrem Emissionsspektrum unterscheiden,
- Anregen (3) der Fluoreszenzmarker (8, 9) mit eine Intensitätsverteilung (24) aufweisendem Anregungslicht (25) zur Emission von Fluoreszenzlicht (42) an der jeweiligen Position eines lokalen Minimums (51) einer Intensitätsverteilung (48) von Fluoreszenzverhinderungslicht (46), wobei das lokale Minimum (51) an verschiedenen Positionen in einem Nahbereich (18) in der Probe (13) angeordnet wird, dessen Abmessungen nicht größer als die Beugungsgrenze bei der Wellenlänge des Anregungslichts (25) und der Wellenlänge des Fluoreszenzlichts (42) sind,
- Registrieren (4) des aus der Probe (13) emittierten Fluoreszenzlichts (42) für die verschiedenen Positionen (20, 21, 22, 23) des Minimums (51) und
- Bestimmen (5) von Positionen der Fluoreszenzmarker (8, 9) in der Probe (13) aus den für die verschiedenen Positionen (20, 21, 22, 23) des Minimums (51) registrierten Intensitäten des Fluoreszenzlichts (42),
**gekennzeichnet durch**
- Registrieren (4) des aus der Probe (13) emittierten Fluoreszenzlichts (42) getrennt für die einzelnen Fluoreszenzmarker (8, 9) und für die verschiedenen Positionen (20, 21, 22, 23) des Minimums (51), wobei das registrierte Fluoreszenzlicht (42) jeweils sowohl einem bestimmten Fluoreszenzmarker (8, 9) als auch einer bestimmten Position (20, 21, 22, 23) des Minimums (51) in der Probe (13) zugeordnet wird;
- Bestimmen (5) von Positionen der einzelnen Fluoreszenzmarker (8, 9) in der Probe (13) aus den für den jeweiligen Fluoreszenzmarker (8, 9) für die verschiedenen Positionen (20, 21, 22, 23) des Minimums (51) registrierten Intensitäten des Fluoreszenzlichts (42).

2. Verfahren nach Anspruch 1, **dadurch gekennzeichnet, dass** die Fluoreszenzmarker (8, 9) vor dem getrennten Registrieren (4) des aus der Probe (13) emittierten Fluoreszenzlichts (42) für die einzelnen Fluoreszenzmarker (8, 9) vereinzelt werden, indem
- ein Teil der Fluoreszenzmarker (8, 9) mit Schaltlicht aus einem aktiven Zustand der Fluoreszenzmarker (8, 9) in einen inaktiven Zustand der Fluoreszenzmarker (8, 9) und/oder
- ein Teil der Fluoreszenzmarker (8, 9) mit Schaltlicht aus einem inaktiven Zustand der Fluoreszenzmarker (8, 9) in einen aktiven Zustand der Fluoreszenzmarker (8, 9) geschaltet wird.

3. Verfahren zum räumlichen Messen einer nanoskaligen Struktur in einer Probe (13) mit den Schritten:
- Markieren (1) der Struktur an verschiedenen Stellen mit Fluoreszenzmarkern (8, 9),
- Anregen (3) der Fluoreszenzmarker (8, 9) mit eine Intensitätsverteilung (24) aufweisendem Anregungslicht (25) zur Emission von Fluoreszenzlicht (42) an der jeweiligen Position eines lokalen Minimums (51) einer Intensitätsverteilung (48) von Fluoreszenzverhinderungslicht (46), wobei das lokale Minimum (51) an verschiedenen Positionen in einem Nahbereich (18) in der Probe (13) angeordnet wird, dessen Abmessungen nicht größer als die Beugungsgrenze bei der Wellenlänge des Anregungslichts (25) und der Wellenlänge des Fluoreszenzlichts (42) sind,
- Registrieren (4) des aus der Probe (13) emittierten Fluoreszenzlichts (42) für die verschiedenen Positionen (20, 21, 22, 23) des Minimums (51) und
- Bestimmen (5) von Positionen der Fluoreszenzmarker (8, 9) in der Probe (13) aus den für die verschiedenen Positionen (20, 21, 22, 23) des Minimums (51) registrierten Intensitäten des Fluoreszenzlichts (42),
**gekennzeichnet durch**
- Auswählen der Fluoreszenzmarker (8, 9) Fluoreszenzmarker (8, 9), mit denen die Struktur (7) an verschiedenen Stellen markiert wird, aus Fluoreszenzmarkern (8, 9), die einen aktiven Zustand, in dem sie mit Anregungslicht (25) zur Emission von Fluoreszenzlicht (42) anregbar sind, und einen inaktiven Zustand, in dem sie zumindest mit demselben Anregungslicht (25) nicht zur Emission von Fluoreszenzlicht (42) anregbar sind, aufweisen und die zwischen ihrem aktiven und ihrem inaktiven Zustand überführbar sind,
- Registrieren (4) des aus der Probe (13) emittierten Fluoreszenzlichts (42) getrennt für die einzelnen Fluoreszenzmarker (8, 9) und für die verschiedenen Positionen (20, 21, 22, 23) des Minimums (51),
- wobei die Fluoreszenzmarker (8, 9) vor dem getrennten Registrieren (4) des aus der Probe (13) emittierten Fluoreszenzlichts (42) für die einzelnen Fluoreszenzmarker (8, 9) vereinzelt werden, indem
- ein Teil der Fluoreszenzmarker (8, 9) mit Schaltlicht aus ihrem aktiven Zustand in ihren inaktiven Zustand und/oder
- ein Teil der Fluoreszenzmarker (8, 9) mit Schaltlicht aus ihrem inaktiven Zustand in ihren aktiven Zustand
geschaltet wird, und
- wobei das registrierte Fluoreszenzlicht (42) jeweils sowohl einem bestimmten Fluoreszenzmarker (8, 9) als auch einer bestimmten Position (20, 21, 22, 23) des Minimums (51) in der Probe (13) zugeordnet wird;
- Bestimmen (5) von Positionen der einzelnen Fluoreszenzmarker (8, 9) in der Probe (13) aus den für den jeweiligen Fluoreszenzmarker (8, 9) für die verschiedenen Positionen (20, 21, 22, 23) des Minimums (51) registrierten Intensitäten des Fluoreszenzlichts (42).

4. Verfahren zum räumlichen Messen einer nanoskaligen Struktur in einer Probe (13) mit den Schritten:
- Markieren (1) der Struktur an verschiedenen Stellen mit Fluoreszenzmarkern (8, 9),
- Anregen (3) der Fluoreszenzmarker (8, 9) mit eine Intensitätsverteilung (24) aufweisendem Anregungslicht (25) zur Emission von Fluoreszenzlicht (42) an der jeweiligen Position eines lokalen Minimums (51) einer Intensitätsverteilung (48) von Fluoreszenzverhinderungslicht (46), wobei das lokale Minimum (51) an verschiedenen Positionen in einem Nahbereich (18) in der Probe (13) angeordnet wird, dessen Abmessungen nicht größer als die Beugungsgrenze bei der Wellenlänge des Anregungslichts (25) und der Wellenlänge des Fluoreszenzlichts (42) sind,
- Registrieren (4) des aus der Probe (13) emittierten Fluoreszenzlichts (42) für die verschiedenen Positionen (20, 21, 22, 23) des Minimums (51) und
- Bestimmen (5) von Positionen der Fluoreszenzmarker (8, 9) in der Probe (13) aus den für die verschiedenen Positionen (20, 21, 22, 23) des Minimums (51) registrierten Intensitäten des Fluoreszenzlichts (42),
**gekennzeichnet durch**
- Auswählen der Fluoreszenzmarker (8, 9) Fluoreszenzmarker (8, 9), mit denen die Struktur (7) an verschiedenen Stellen markiert wird, aus Fluoreszenzmarkern (8, 9), die in der Probe (13) beweglich sind und die sich einzeln an verschiedenen Stellen an die Struktur (7) anlagern, wobei die Fluoreszenzmarker (8, 9) der Probe (13) in solcher Konzentration und/oder in einer solchen räumlichen Verteilung zugesetzt werden, dass sie sich nacheinander einzeln an die Struktur (7) anlagern, und wobei
- die Fluoreszenzmarker (8, 9) beim Anlagern an die Struktur aus einem inaktiven Zustand, in dem sie mit dem Anregungslicht (25) nicht zur Emission von Fluoreszenzlicht (42) anregbar sind, in einen aktiven Zustand, in dem sie mit dem Anregungslicht (25) zur Emission von Fluoreszenzlicht (42) anregbar sind, überführt werden und/oder
- sich die Fluoreszenzmarker (8, 9) nur temporär an die Struktur (7) anlagern und/oder
- die Fluoreszenzmarker (8, 9) bei längerem Einwirken des Anregungslichts (25) und/oder des Fluoreszenzverhinderungslichts (46) anhaltend in einen Dunkelzustand überführt werden
- Registrieren (4) des aus der Probe (13) emittierten Fluoreszenzlichts (42) getrennt für die einzelnen Fluoreszenzmarker (8, 9) und für die verschiedenen Positionen (20, 21, 22, 23) des Minimums (51), wobei das registrierte Fluoreszenzlicht (42) jeweils sowohl einem bestimmten Fluoreszenzmarker (8, 9) als auch einer bestimmten Position (20, 21, 22, 23) des Minimums (51) in der Probe (13) zugeordnet wird;
- Bestimmen (5) von Positionen der einzelnen Fluoreszenzmarker (8, 9) in der Probe (13) aus den für den jeweiligen Fluoreszenzmarker (8, 9) für die verschiedenen Positionen (20, 21, 22, 23) des Minimums (51) registrierten Intensitäten des Fluoreszenzlichts (42).

5. Verfahren nach einem der vorhergehenden Ansprüche, **dadurch gekennzeichnet, dass** die Intensitätsverteilung (24) des Anregungslichts (25) an der jeweiligen Position des lokalen Minimums (51) der Intensitätsverteilung (48) des Fluoreszenzverhinderungslichts (46) ein Maximum (47) aufweist.

6. Verfahren nach einem der vorhergehenden Ansprüche, **dadurch gekennzeichnet, dass** die Abmessungen des Nahbereichs (18)
- nicht größer als die Hälfte oder ein Viertel der Beugungsgrenze bei der Wellenlänge des Anregungslichts (25) und der Wellenlänge des Fluoreszenzlichts (42) und/oder
- nicht größer als eine Halbwertsbreite oder die Hälfte oder ein Viertel der Halbwertsbreite einer Verteilung (50) der Intensität des von dem jeweiligen Fluoreszenzmarker (8, 9) emittierten Fluoreszenzlichts (42) über dessen Abstand zu dem lokalen Minimum (51) sind.

7. Verfahren nach einem der vorhergehenden Ansprüche, **dadurch gekennzeichnet, dass** die Positionen der einzelnen Fluoreszenzmarker (8, 9) aus den für nicht mehr als 4n oder für nicht mehr als 3n oder für nicht mehr als 2n verschiedene Positionen (20, 21, 22, 23) des Minimums (51) registrierten Intensitäten des Fluoreszenzlichts (42) bestimmt werden, wobei n die Anzahl der Raumrichtungen ist, in denen die Positionen der einzelnen Fluoreszenzmarker (8, 9) in der Probe (13) bestimmt werden.

8. Verfahren nach einem der vorhergehenden Ansprüche, **dadurch gekennzeichnet,**
- **dass** das Bestimmen (5) der Positionen der einzelnen Fluoreszenzmarker (8, 9) in der Probe (13) ein Anfitten einer ein lokales Maximum aufweisenden räumlichen Funktion an die für den jeweiligen Fluoreszenzmarker (8, 9) für die verschiedenen Positionen (20, 21, 22, 23) des Minimums (51) registrierten Intensitäten des Fluoreszenzlichts (42) umfasst.

9. Verfahren nach Anspruch 8, **dadurch gekennzeichnet,**
- **dass** die das lokale Maximum aufweisende räumliche Funktion unter Abtasten mindestens eines der oder eines weiteren Fluoreszenzmarkers (8, 9) mit dem Minimum (51) und Registrieren (4) des dabei aus der Probe (13) reflektierten Lichts oder emittierten Fluoreszenzlichts (42) bestimmt wird,
- wobei, optional, die das lokale Maximum aufweisende räumliche Funktion unter zusätzlichem Abtasten des mindestens einen der oder des weiteren Fluoreszenzmarkers (8, 9) nur mit einem Maximum (47) des Anregungslichts (25), das das Anregungslicht (25) an der jeweiligen Position des lokalen Minimums (51) aufweist, und Registrieren (4) des dabei aus der Probe (13) reflektierten Lichts oder emittierten Fluoreszenzlichts (42) bestimmt wird.

10. Verfahren nach einem der vorhergehenden Ansprüche, **dadurch gekennzeichnet, dass** die Schritte des Anregens, Registrierens (4) und Bestimmens (5) für mindestens eine erhöhte Intensität des Fluoreszenzverhinderungslichts (46) wiederholt werden.

11. Verfahren nach einem der vorhergehenden Ansprüche, **dadurch gekennzeichnet, dass** der Nahbereich (18) mit anderen Mitteln zur Relativverlagerung des Minimums (51) gegenüber der Probe (13) angefahren wird als die Positionen (20, 21, 22, 23) des Minimums (51) innerhalb des Nahbereichs (18).

12. Verfahren nach einem der vorhergehenden Ansprüche, **dadurch gekennzeichnet,**
- **dass** die Struktur an ein einzelnes Positionierhilfsmittel (12) gekoppelt wird, dessen Position (19) in der Probe (13) bekannt ist und/oder nach dem Koppeln (2) aus von dem Positionierhilfsmittel (12) reflektiertem Licht bestimmt wird, wobei der Nahbereich (18) um die bekannte Position (19) des jeweiligen Positionierhilfsmittels (12) angeordnet wird,
- wobei, optional, die Position (19) des Positionierhilfsmittels (12) relativ zu Fixpunkten (29) der Probe (13) festliegt und der Nahbereich (18) oder die Positionen (20, 21, 22, 23) des Minimums (51) innerhalb des Nahbereichs (18) relativ zu dem Fixpunkt (29) der Probe (13) angefahren wird/werden.

13. Verfahren nach einem der vorhergehenden Ansprüche, **dadurch gekennzeichnet, dass** zusätzlich die Schritte durchgeführt werden:
- Anregen der Fluoreszenzmarker (8, 9) mit Anregungslicht (25) zur Emission von Fluoreszenzlicht (42), wobei die Intensitätsverteilung (24) des Anregungslichts (25) ein lokales Minimum (26) aufweist, das an verschiedenen Positionen in der Probe (13) angeordnet wird,
- Registrieren (4) des aus der Probe (13) emittierten Fluoreszenzlichts (42) getrennt für die einzelnen Fluoreszenzmarker (8, 9) und für die verschiedenen Positionen (20, 21, 22, 23) des Minimums (26) der Intensitätsverteilung (24) des Anregungslichts (25) und
- Bestimmen (5) der Positionen der einzelnen Fluoreszenzmarker (8, 9) in der Probe (13) aus den für den jeweiligen Fluoreszenzmarker (8, 9) für die verschiedenen Positionen (20, 21, 22, 23) des Minimums (26) der Intensitätsverteilung (24) des Anregungslichts (25) registrierten Intensitäten des Fluoreszenzlichts (42).

14. Verfahren nach Anspruch 13, **dadurch gekennzeichnet, dass** zueinander komplementäre Intensitätsverläufe des von den einzelnen Fluoreszenzmarkern (8, 9) aus der Probe (13) emittierten Fluoreszenzlichts (42), die sich einerseits über den verschiedenen Positionen (20, 21, 22, 23) des Minimums (51) der Intensitätsverteilung (48) des Fluoreszenzverhinderungslichts (46) und andererseits über den verschiedenen Positionen (20, 21, 22, 23) des Minimums (26) der Intensitätsverteilung (24) des Anregungslichts (25) ergeben, beim Bestimmen (5) der Positionen der einzelnen Fluoreszenzmarker (8, 9) in der Probe (13) miteinander abgeglichen werden.

15. Verfahren nach Anspruch 13 oder 14, **dadurch gekennzeichnet, dass** Positionen der einzelnen Fluoreszenzmarker (8, 9) in der Probe (13), die aus den
- für den jeweiligen Fluoreszenzmarker (8, 9) für die verschiedenen Positionen (20, 21, 22, 23) des Minimums (51) der Intensitätsverteilung (48) des Fluoreszenzverhinderungslichts (46) registrierten Intensitäten des Fluoreszenzlichts (42) oder
- den für den jeweiligen Fluoreszenzmarker (8, 9) für die verschiedenen Positionen (20, 21, 22, 23) des Minimums (26) der Intensitätsverteilung (24) des Anregungslichts (25) registrierten Intensitäten des Fluoreszenzlichts (42)
bestimmt werden, bei der Festlegung der Positionen berücksichtigt werden, an denen anschließend das andere Minimum (26, 51) der Intensitätsverteilung (24) des Anregungslichts (25) bzw. der Intensitätsverteilung (48) des Fluoreszenzverhinderungslichts (46) angeordnet wird.

## Claims

1. Method of spatially measuring a nano-scale structure in a sample (13), comprising the steps of:
- marking (1) the structure at different locations with fluorescent markers (8, 9) which are selected from fluorescent markers (8, 9) that differ in their excitation spectrum and/or their emission spectrum,
- exciting (3) the fluorescent markers (8, 9) with excitation light (25) having an intensity distribution (24) for emission of fluorescence light (42) at the respective position of a local minimum (51) of an intensity distribution (48) of fluorescence inhibition light (46), wherein the local minimum (51) is arranged at different positions in a close-up range (18) in the sample (13), whose dimensions are not larger than the diffraction limit at the wavelength of the excitation light (25) and the wavelength of the fluorescence light (42),
- registering (4) the fluorescence light (42) emitted out of the sample (13) for the different positions (20, 21, 22, 23) of the minimum (51), and
- determining (5) positions of the fluorescent markers (8, 9) in the sample (13) from the intensities of the fluorescence light (42) registered for the different positions (20, 21, 22, 23) of the minimum (51),
**characterized by**
- registering (4) the fluorescence light (42) emitted out of the sample (13) separately for the individual fluorescent markers (8, 9) and for the different positions (20, 21, 22, 23) of the minimum (51), wherein the fluorescence light (42) registered is assigned both to a certain fluorescent marker (8, 9) and to a certain position (20, 21, 22, 23) of the minimum (51) in the sample (23);
- determining (5) positions of the individual fluorescent markers (8, 9) in the sample (13) from the intensities of the fluorescence light (42) registered for the respective fluorescent marker (8, 9) for the different positions (20, 21, 22, 23) of the minimum (51).

2. Method of claim 1, **characterized in that** the fluorescent markers (8, 9), prior to separately registering (4) the fluorescence light (42) emitted out of the sample (13) for the individual fluorescent markers (8, 9) are individualized **in that**
- a part of the fluorescent markers (8, 9) is switched with switching light out of an active state of the fluorescent markers (8, 9) into an inactive state of the fluorescent markers (8, 9), and/or
- a part of the fluorescent markers (8, 9) is switched with switching light out of an inactive state of the fluorescent markers (8, 9) into an active state of the fluorescent markers (8, 9).

3. Method of spatially measuring a nano-scale structure in a sample (13), comprising:
- marking (1) the structure at different locations with fluorescent markers (8, 9),
- exciting (3) the fluorescent markers (8, 9) with excitation light (25) having an intensity distribution (24) for emission of fluorescence light (42) at the respective position of a local minimum (51) of an intensity distribution (48) of fluorescence inhibition light (46), wherein the local minimum (51) is arranged at different positions in a close-up range (18) in the sample (13), whose dimensions are not larger than the diffraction limit at the wavelength of the excitation light (25) and the wavelength of the fluorescence light (42),
- registering (4) the fluorescence light (42) emitted out of the sample (13) for the different positions (20, 21, 22, 23) of the minimum (51), and
- determining (5) positions of the fluorescent markers (8, 9) in the sample (13) from the intensities of the fluorescence light (42) registered for the different positions (20, 21, 22, 23) of the minimum (51),
**characterized by**
- selecting the fluorescent markers (8, 9) by which the structure is marked at different locations from fluorescent markers (8, 9) that have an active state in which they are excitable with excitation light (25) for emission of fluorescence light (42) and an inactive state in which they are, at least with the same excitation light (25), not excitable for emission of fluorescence light (42), and that are transferable between their active and their inactive state,
- registering (4) the fluorescence light (42) emitted out of the sample (13) separately for the individual fluorescent markers (8, 9) and for the different positions (20, 21, 22, 23) of the minimum (51),
- wherein the fluorescent markers (8, 9), prior to separately registering (4) the fluorescence light (42) emitted out of the sample (13) for the individual fluorescent markers (8, 9), are individualized in that
- a part of the fluorescent markers (8, 9) is switched with switching light out of their active state into their inactive state, and/or
- a part of the fluorescent markers (8, 9) is switched with switching light out of their inactive state into their active state, and
- wherein the registered fluorescence light (42) is assigned both to a certain fluorescent marker (8, 9) and to a certain position (20, 21, 22, 23) of the minimum (51) in the sample (23);
- determining (5) positions of the individual fluorescent markers (8, 9) in the sample (13) from the intensities of the fluorescence light (42) registered for the respective fluorescent marker (8, 9) for the different positions (20, 21, 22, 23) of the minimum (51).

4. Method of spatially measuring a nano-scale structure in a sample (13), comprising:
- marking (1) the structure at different locations with fluorescent markers (8, 9),
- exciting (3) the fluorescent markers (8, 9) with excitation light (25) having an intensity distribution (24) for emission of fluorescence light (42) at the respective position of a local minimum (51) of an intensity distribution (48) of fluorescence inhibition light (46), wherein the local minimum (51) is arranged at different positions in a close-up range (18) in the sample (13), whose dimensions are not larger than the diffraction limit at the wavelength of the excitation light (25) and the wavelength of the fluorescence light (42),
- registering (4) the fluorescence light (42) emitted out of the sample (13) for the different positions (20, 21, 22, 23) of the minimum (51), and
- determining (5) positions of the fluorescent markers (8, 9) in the sample (13) from the intensities of the fluorescence light (42) registered for the different positions (20, 21, 22, 23) of the minimum (51),
**characterized by**
- selecting the fluorescent markers (8, 9) by which the structure is marked at different locations from fluorescent markers (8, 9) that are movable within the sample (13) and which individually attach at different points to the structure (7), wherein the fluorescence markers (8, 9) are added to the sample (13) at such a concentration and/or at such a spatial distribution that they successively individually attach to the structure (7), and wherein
- the fluorescence markers (8, 9) upon attaching to the structure are transferred out of an inactive state in which they are not excitable with the excitation light (25) for emission of fluorescence light (42) into an active state in which they are excitable with the excitation light (25) for emission of fluorescence light (42), and/or
- the fluorescence markers (8, 9) only temporarily attach to the structure (7), and/or
- the fluorescence markers (8, 9) under longtime influence of the excitation light (25) and/or the fluorescence inhibition light (46) are permanently transferred into a dark state,
- registering (4) the fluorescence light (42) emitted out of the sample (13) separately for the individual fluorescent markers (8, 9) and for the different positions (20, 21, 22, 23) of the minimum (51), wherein the fluorescence light (42) registered is assigned both to a certain fluorescent marker (8, 9) and to a certain position (20, 21, 22, 23) of the minimum (51) in the sample (23);
- determining (5) positions of the individual fluorescent markers (8, 9) in the sample (13) from the intensities of the fluorescence light (42) registered for the respective fluorescent marker (8, 9) for the different positions (20, 21, 22, 23) of the minimum (51).

5. Method of any of the preceding claims, **characterized in that** the intensity distribution (24) of the excitation light (25), at the respective position of the local minimum (51) of the intensity distribution (48) of the fluorescence inhibition light (46) has a maximum (47).

6. Method of any of the preceding claims, **characterized in that** the dimensions of the close-up range (18) are
- not larger than a half or a quarter of the diffraction limit at the wavelength of the excitation light (25) and the wavelength of the fluorescence light (42), and/or
- not larger than a full width at half maximum or the half or quarter of the full width at half maximum of a distribution (50) of the intensity of the fluorescence light (42) emitted by the respective fluorescence marker (8, 9) over its distance to the local minimum (51).

7. Method of any of the preceding claims, **characterized in that** the positions of the individual fluorescent markers (8, 9) are determined from the intensities of the fluorescence light (42) which are registered for not more than 4n or for not more than 3n or for not more than 2n different positions (20, 21, 22, 23) of the minimum (51), wherein n is the number of the spatial directions in which the positions of the individual fluorescent markers (8, 9) in the sample (13) are determined.

8. Method of any of the preceding claims, **characterized in**
- **that** the determining (5) of the positions of the individual fluorescent markers (8, 9) in the sample (13) includes fitting a spatial function comprising a local maximum to the intensities of the fluorescence light (42) registered for the respective fluorescent marker (8, 9) for the different positions (20, 21, 22, 23) of the minimum (51).

9. Method of claim 8, **characterized in**
- **that** the spatial function comprising the local maximum is determined by scanning at least one of the or a further fluorescent marker(s) (8, 9) with the minimum (51) and registering (4) the light reflected or the fluorescence light (42) emitted out of the sample (13) while scanning,
- wherein, optionally, the spatial function comprising the local maximum is determined by additionally scanning the at least one of the or the further fluorescence markers (8, 9) only with a maximum (47) of the excitation light (25) which the excitation light (25) comprises at the respective position of the local minimum (51), and registering light reflected or fluorescence light (42) emitted out of the sample (13) while scanning.

10. Method of any of the preceding claims, **characterized in that** the steps of exciting, registering (4) and determining (5) are repeated for at least one increased intensity of the fluorescence inhibition light (46).

11. Method of any of the preceding claims, **characterized in that** the close-up range (18) is approached by other means for relative movement of the minimum (51) with regard to the sample (13) than the positions (20, 21, 22, 23) of the minimum (51) within the close-up range (18).

12. Method of any of the preceding claims, **characterized in that**
- the structure is coupled to a single positioning aid (12) whose position (19) in the sample (13) is known and/or determined after the coupling (2) from light reflected by the positioning aid (12), wherein the close-up range (18) is arranged around the known position (19) of the respective positioning aid (12),
- wherein, optionally, the position (19) of the positioning aids (12) is fixed relative to fixed points (29) of the sample (13) and wherein the close-up range (18) or the positions (20, 21, 22, 23) of the minimum (51) within the close-up range (18) is/are approached relative to the fixed points (29) of the sample (13).

13. Method of any of the preceding claims, **characterized in that**, additionally, the steps are carried out:
- exciting the fluorescence markers (8, 9) with excitation light (25) for emission of fluorescence light (42), wherein the intensity distribution (24) of the excitation light (25) has a local minimum (26) which is arranged at different positions within the sample (13),
- registering (4) the fluorescence light (42) emitted out of the sample (13) separately for the individual fluorescence markers (8, 9) and the different positions (20, 21, 22, 23) of the minimum (26) of the intensity distribution (24) of the excitation light (25), and
- determining (5) the positions of the individual fluorescence markers (8, 9) in the sample (13) from the intensities of the fluorescence light (42) registered for the respective fluorescence marker (8, 9) for the different positions (20, 21, 22, 23) of the minimum (26) of the intensity distribution (24) of the excitation light (25).

14. Method of claim 13, **characterized in that** complementary intensity courses of the fluorescence light (42) emitted by the individual fluorescence markers (8, 9) out of the sample (13) which result from the different positions (20, 21, 22, 23) of the minimum (51) of the intensity distribution (48) of the fluorescence inhibition light (46), on the one hand, and over the different positions (20, 21, 22, 23) of the minimum (26) of the intensity distribution (24) of the excitation light (25), on the other hand, are aligned with one another in determining (5) the positions of the individual fluorescence markers (8, 9) in the sample (13).

15. Method of claim 13 or 14, **characterized in that** the positions of the individual fluorescence markers (8, 9) in the sample (13), which are determined from
- the intensities of the fluorescence light (42) registered for the respective fluorescence marker (8, 9) for the different positions (20, 21, 22, 23) of the minimum (51) of the intensity distribution (48) of the fluorescence inhibition light (46) or
- the intensities of the fluorescence light (42) registered for the respective fluorescence marker (8, 9) for the different positions (20, 21, 22, 23) of the minimum (26) of the intensity distribution (24) of the excitation light (25),
are considered in setting the positions at which the respective other minimum (26, 51) of the intensity distribution (24) of the excitation light (25) or the intensity distribution (48) of the fluorescence inhibition light (46) is arranged afterwards.

## Revendications

1. Procédé de mesure spatiale d'une structure à l'échelle nanométrique dans un échantillon (13) avec les étapes suivantes :
- marquage (1) de la structure à différents endroits avec des marqueurs fluorescents (8, 9), qui sont sélectionnés parmi des marqueurs fluorescents (8, 9), qui se distinguent par leur spectre d'excitation et/ou leur spectre d'émission,
- excitation (3) des marqueurs fluorescents (8, 9) avec une lumière d'excitation (25) présentant une distribution d'intensité (24) pour l'émission d'une lumière fluorescente (42) à la position respective d'un minimum local (51) d'une distribution d'intensité (48) d'une lumière anti-fluorescence (46), dans lequel le minimum local (51) est disposé à différentes positions dans une zone locale (18) dans l'échantillon (13), dont les dimensions ne sont pas plus grandes que la limite de diffraction à la longueur d'onde de la lumière d'excitation (25) et à la longueur d'onde de la lumière fluorescente (42),
- enregistrement (4) de la lumière fluorescente (42) émise à partir de l'échantillon (13) pour les différentes positions (20, 21, 22, 23) du minimum (51) et
- détermination (5) des positions des marqueurs fluorescents (8, 9) dans l'échantillon (13) à partir des intensités de la lumière fluorescente (42) enregistrées pour les différentes positions (20, 21, 22, 23) du minimum (51),
**caractérisé par**
- l'enregistrement (4) de la lumière fluorescente (42) émise à partir de l'échantillon (13) séparément pour les différents marqueurs fluorescents (8, 9) et pour les différentes positions (20, 21, 22, 23) du minimum (51), dans lequel la lumière fluorescente (42) enregistrée correspond aussi bien à un marqueur fluorescent (8, 9) déterminé qu'à une position (20, 21, 22, 23) déterminée du minimum (51) dans l'échantillon (13),
- la détermination (5) des positions des différents marqueurs fluorescents (8, 9) dans l'échantillon (13) à partir des marqueurs fluorescents (8, 9) respectifs pour les intensités de la lumière fluorescente (42) enregistrées pour les différentes positions (20, 21, 22, 23) du minium (51).

2. Procédé selon la revendication 1, **caractérisé en ce que** les marqueurs fluorescents (8, 9) sont individualisés avant l'enregistrement (4) séparé de la lumière fluorescente (42) émise à partir de l'échantillon (13) pour les différents marqueurs fluorescents (8, 9),
- en faisant passer une partie des marqueurs fluorescents (8, 9), avec une lumière de commutation, d'un état actif des marqueurs fluorescents (8, 9) à un état inactif des marqueurs fluorescents (8, 9) et/ou
- en faisant passer une partie des marqueurs fluorescents (8, 9), avec une lumière de commutation, d'un état inactif des marqueurs fluorescents (8, 9) à un état actif des marqueurs fluorescents (8, 9).

3. Procédé de mesure spatiale d'une structure à l'échelle nanométrique dans un échantillon (13) avec les étapes suivantes :
- marquage (1) de la structure à différents endroits avec des marqueurs fluorescents (8, 9),
- excitation (3) des marqueurs fluorescents (8, 9) avec une lumière d'excitation (25) présentant une distribution d'intensité (24) pour l'émission d'une lumière fluorescente (42) à la position respective d'un minimum local (51) d'une distribution d'intensité (48) d'une lumière anti-fluorescence (46), dans lequel le minimum local (51) est disposé à différentes positions dans une zone locale (18) dans l'échantillon (13), dont les dimensions ne sont pas plus grandes que la limite de diffraction à la longueur d'onde de la lumière d'excitation (25) et à la longueur d'onde de la lumière fluorescente (42),
- enregistrement (4) de la lumière fluorescente (42) émise à partir de l'échantillon (13) pour les différentes positions (20, 21, 22, 23) du minimum (51) et
- détermination (5) des positions des marqueurs fluorescents (8, 9) dans l'échantillon (13) à partir des intensités de la lumière fluorescente (42) enregistrées pour les différentes positions (20, 21, 22, 23) du minimum (51),
**caractérisé par**
- la sélection des marqueurs fluorescents (8, 9) avec lesquels la structure (7) est marquée à différents endroits, parmi des marqueurs fluorescents (8, 9) qui présentent un état actif, dans lequel ils peuvent être excités avec une lumière d'excitation (25) pour l'émission d'une lumière fluorescente (42), et un état inactif, dans lequel ils ne peuvent pas être excités au moins avec la même lumière d'excitation (25) pour l'émission d'une lumière fluorescente (42), et qui peuvent être commutés entre leur état actif et leur état inactif,
- l'enregistrement (4) de la lumière fluorescente (42) émise à partir de l'échantillon (13) séparément pour les différents marqueurs fluorescents (8, 9) et pour les différentes positions (20, 21, 22, 23) du minimum (51),
- dans lequel les marqueurs fluorescents (8, 9) sont individualisés avant l'enregistrement (4) séparé de la lumière fluorescente (42) émise à partir de l'échantillon (13) pour les différents marqueurs fluorescents (8, 9),
- en faisant passer une partie des marqueurs fluorescents (8, 9), avec une lumière de commutation, de leur état actif à leur état inactif et/ou
- en faisant passer une partie des marqueurs fluorescents (8, 9), avec une lumière de commutation, de leur état inactif à leur état actif et
- dans lequel la lumière fluorescente (42) enregistrée correspond à un marqueur fluorescent (8, 9) déterminé qu'à une position (20, 21, 22, 23) déterminée du minimum (51) dans l'échantillon (13),
- la détermination (5) des positions des différents marqueurs fluorescents (8, 9) dans l'échantillon (13) à partir des marqueurs fluorescents (8, 9) respectifs pour les intensités de la lumière fluorescente (42) enregistrées pour les différentes positions (20, 21, 22, 23) du minium (51).

4. Procédé de mesure spatiale d'une structure à l'échelle nanométrique dans un échantillon (13) avec les étapes suivantes :
- marquage (1) de la structure à différents endroits avec des marqueurs fluorescents (8, 9),
- excitation (3) des marqueurs fluorescents (8, 9) avec une lumière d'excitation (25) présentant une distribution d'intensité (24) pour l'émission d'une lumière fluorescente (42) à la position respective d'un minimum local (51) d'une distribution d'intensité (48) d'une lumière anti-fluorescence (46), dans lequel le minimum local (51) est disposé à différentes positions dans une zone locale (18) dans l'échantillon (13), dont les dimensions ne sont pas plus grandes que la limite de diffraction à la longueur d'onde de la lumière d'excitation (25) et à la longueur d'onde de la lumière fluorescente (42),
- enregistrement (4) de la lumière fluorescente (42) émise à partir de l'échantillon (13) pour les différentes positions (20, 21, 22, 23) du minimum (51) et
- détermination (5) des positions des marqueurs fluorescents (8, 9) dans l'échantillon (13) à partir des intensités de la lumière fluorescente (42) enregistrées pour les différentes positions (20, 21, 22, 23) du minimum (51),
**caractérisé par**
- la sélection des marqueurs fluorescents (8, 9) avec lesquels la structure (7) est marquée à différents endroits, parmi des marqueurs fluorescents (8, 9) qui sont mobiles dans l'échantillon (13) et qui se fixent à différents endroits sur la structure (7), dans lequel les marqueurs fluorescents (8, 9) sont ajoutés à l'échantillon (13) dans une concentration et/ou dans une distribution spatiale telle qu'ils se fixent les uns après les autres à la structure (7) et dans lequel
- les marqueurs fluorescents (8, 9), lors de leur fixation sur la structure, peuvent passer d'un état inactif, dans lequel ils ne peuvent pas être excités avec une lumière d'excitation (25) pour l'émission d'une lumière fluorescente (42), à un état actif, dans lequel ils peuvent être excités au moins avec une lumière d'excitation (25) pour l'émission d'une lumière fluorescente (42) et/ou
- les marqueurs fluorescents (8, 9) ne se fixent que temporairement à la structure (7) et/ou
- les marqueurs fluorescents (8, 9) passent durablement dans un état sombre lors d'une action prolongée de la lumière d'excitation (25) et/ou de la lumière anti-fluorescence (46),
- l'enregistrement (4) de la lumière fluorescente (42) émise à partir de l'échantillon (13) séparément pour les différents marqueurs fluorescents (8, 9) et pour les différentes positions (20, 21, 22, 23) du minimum (51), dans lequel la lumière fluorescente (42) enregistrée correspond aussi bien à un marqueur fluorescent (8, 9) déterminé qu'à une position (20, 21, 22, 23) déterminée du minimum (51) dans l'échantillon (13),
- la détermination (5) des positions des différents marqueurs fluorescents (8, 9) dans l'échantillon (13) à partir des marqueurs fluorescents (8, 9) respectifs pour les intensités de la lumière fluorescente (42) enregistrées pour les différentes positions (20, 21, 22, 23) du minium (51).

5. Procédé selon l'une des revendications précédentes, **caractérisé en ce que** la distribution d'intensité (24) de la lumière d'excitation (25) présente un maximum (47) à la position respective du minimum local (51) de la distribution d'intensité (48) de la lumière anti-fluorescence (46).

6. Procédé selon l'une des revendications précédentes, **caractérisé en ce que** les dimensions de la zone locale (18)
- ne sont pas plus grandes que la moitié ou un quart de la limite de diffraction à la longueur d'onde de la lumière d'excitation (25) et à la longueur d'onde de la lumière fluorescente (42) et/ou
- ne sont pas plus grandes qu'une largeur à mi-hauteur ou la moitié ou un quart de la largeur à mi-hauteur d'une distribution (50) de l'intensité de la lumière fluorescente (42) émise par le marqueur fluorescent (8, 9) respectif sur sa distance par rapport au minimum local (51).

7. Procédé selon l'une des revendications précédentes, **caractérisé en ce que** les positions des différents marqueurs fluorescents (8, 9) sont déterminées à partir des intensités de la lumière fluorescente (42) enregistrées pour pas plus de 4n ou pour pas plus de 3n ou pour pas plus de 2n positions (20, 21, 22, 23) différentes du minimum (51), dans lequel n est le nombre de directions spatiales dans lesquelles les positions des différents marqueurs fluorescents (8, 9) dans l'échantillon (13) sont déterminées.

8. Procédé selon l'une des revendications précédentes, **caractérisé en ce que**
- la détermination (5) des positions des différents marqueurs fluorescents (8, 9) dans l'échantillon (13) comprend une adaptation d'une fonction spatiale présentant un maximum local aux intensités de la lumière fluorescente (42) enregistrées, pour le marqueur fluorescent (8, 9) respectif, pour les différentes positions (20, 21, 22, 23) du minimum (51).

9. Procédé selon la revendication 8, **caractérisé en ce que**
- la fonction spatiale présentant le maximum local est déterminée en balayant au moins un ou un autre marqueur fluorescent (8, 9) avec le minimum (51) et par l'enregistrement (4) de la lumière réfléchie ou de la lumière fluorescente (42) émise à partir de l'échantillon (13) ,
- dans lequel, en option, la fonction spatiale présentant le maximum local est déterminée en balayant en outre l'au moins un ou l'autre marqueur fluorescent (8, 9) uniquement avec un maximum (47) de la lumière d'excitation (25), que la lumière d'excitation (25) présente à la position respective du minimum local (51), et par l'enregistrement (4) de la lumière réfléchie ou de la lumière fluorescente (42) émise à partir de l'échantillon (13).

10. Procédé selon l'une des revendications précédentes, **caractérisé en ce que** les étapes d'excitation, d'enregistrement (4) et de détermination (5) sont répétées pour au moins une intensité augmentée de la lumière anti-fluorescence (46).

11. Procédé selon l'une des revendications précédentes, **caractérisé en ce que** la zone locale (18) est approchée avec des moyens pour le déplacement relatif du minimum (51) par rapport à l'échantillon (13) qui sont différents des positions (20, 21, 22, 23) du minimum (51) à l'intérieur de la zone locale (18).

12. Procédé selon l'une des revendications précédentes, **caractérisé en ce que**
- la structure est couplée à un moyen de positionnement individuel (12), dont la position (19) dans l'échantillon (13) est connue et/ou, après le couplage (2), est déterminée à partir de la lumière réfléchie par le moyen de positionnement individuel (12), dans lequel la zone locale (18) est disposée autour de la position (19) connue du positionnement individuel (12) correspondant,
- dans lequel, en option, la position (19) du moyen de positionnement (12) par rapport à des points fixes (29) de l'échantillon (13) est fixe et la zone locale (18) ou les positions (20, 21, 22, 23) du minimum (51) à l'intérieur de la zone locale (18) sont approchées par rapport au point fixe (29) de l'échantillon (13).

13. Procédé selon l'une des revendications précédentes, **caractérisé en ce que** les étapes supplémentaires suivantes sont exécutées :
- excitation des marqueurs fluorescents (8, 9) avec une lumière d'excitation (25) pour l'émission d'une lumière fluorescente (42), dans lequel la distribution d'intensité (24) de la lumière d'excitation (25) présente un minimum local (26) qui est disposé à différentes positions dans l'échantillon (13),
- enregistrement (4) de la lumière fluorescente (42) émise à partir de l'échantillon (13) séparément pour les différents marqueurs fluorescents (8, 9) et pour les différents positions (20, 21, 22, 23) du minimum (26) de la distribution d'intensité (24) de la lumière d'excitation (25) et
- détermination (5) des positions des différents marqueurs fluorescents (8, 9) dans l'échantillon (13) à partir des intensités de la lumière fluorescente (42) enregistrées pour les marqueurs fluorescents (8, 9) respectifs pour les différentes positions (20, 21, 22, 23) du minium (26) de la distribution d'intensité (24) de la lumière d'excitation (25).

14. Procédé selon la revendication 13, **caractérisé en ce que** les courbes d'intensité, complémentaires entre elles, de la lumière fluorescente (42) émise par les différents marqueurs fluorescents (8, 9), à partir de l'échantillon (13), qui résultent, d'une part des différentes positions (20, 21, 22, 23) du minimum (51) de la distribution d'intensité (48) de la lumière anti-fluorescence (46) et d'autre part des différentes positions (20, 21, 22, 23) du minimum (26) de la distribution d'intensité (24) de la lumière d'excitation (25), sont comparées entre elles lors de la détermination (5) des positions des différents marqueurs fluorescents (8, 9) dans l'échantillon (13).

15. Procédé selon la revendication 13 ou 14, **caractérisé en ce que** les positions des différents marqueurs fluorescents (8, 9) dans l'échantillon (13), qui sont déterminées
- à partir des intensités de la lumière fluorescente (42) enregistrées pour le marqueur fluorescent (8, 9) respectif pour les différentes positions (20, 21, 22, 23) du minimum (51) de la distribution d'intensité (48) de la lumière anti-fluorescence (46) ou
- à partir des intensités de la lumière fluorescente (42) enregistrées pour le marqueur fluorescent (8, 9) respectif pour les différentes positions (20, 21, 22, 23) du minimum (26) de la distribution d'intensité (24) de la lumière d'excitation (25),
sont prises en compte lors de la détermination des positions auxquelles est disposé l'autre minimum (26, 51) de la distribution d'intensité (24) de la lumière d'excitation (25) respectivement de la distribution d'intensité (48) de la lumière anti-fluorescence (46).
